# EUROPÄISCHE PATENTSCHRIFT

(11) **EP 0 838 381 B1**
(45) Veröffentlichungstag und Bekanntmachung des Hinweises auf die Patenterteilung: **06.12.2000**
(21) Anmeldenummer: 97112921.8
(22) Anmeldetag: 28.07.1997
(51) Int. Cl.: B60T 8/18

(54) **Lastabhängig steuerbare Bremskraftregeleinrichtung**
Load dependent controlled brake force regulating installation
Installation pour la correction de la force de freinage commandée en fonction de la charge

(30) Priorität: 04.10.1996 DE 19641028
(43) Veröffentlichungstag der Anmeldung: 29.04.1998
(73) Patentinhaber: WABCO GmbH & Co. OHG, 30453 Hannover (DE)
(72) Erfinder: Fauck, Gerhard, 30559 Hannover (DE); Kiel, Bernd, 31515 Wunstorf (DE); Tammen, Jürgen, 29690 Lindwedel (DE)
(74) Vertreter: Schrödter, Manfred, Dipl.-Ing.

(56) Entgegenhaltungen:
- EP-A- 0 216 092
- DE-A- 2 457 543
- DE-A- 2 457 793
- DE-A- 3 026 252
- DE-A- 3 209 248
- DE-C- 713 843
- FR-A- 2 108 921

## Beschreibung

Die Erfindung betrifft eine lastabhängig steuerbare Bremskraftregeleinrichtung für eine druckmittelbetätigte Fahrzeugbremsanlage gemäß dem Oberbegriff des Patentanspruchs 1.

Eine derartige Bremskraftregeleinrichtung ist aus der DE 24 57 793 A1 bekannt.

Die bekannte Bremskraftregeleinrichtung besteht aus einem lastabhängig steuerbaren Bremsdruckregelventil mit einem Bremsdruckregelkolben, einem kombinierten Einlaß- und Auslaßventil, einem lastabhängig verstellbaren Stellglied zum Einstellen der Regelgröße von Leerlast bis Vollast und einer Antriebseinrichtung für das Stellglied sowie einem Relaisventil mit einem Relaiskolben und einem kombinierten Einlaß- und Auslaßventil.

Das Relaisventil und das Bremsdruckregelventil sind zu einer Baueinheit zusammengefaßt, derart, daß die Längsachse des Bremsdruckregelventils quer zur Längsachse des Relaisventils verläuft. Zur Versorgung des Relaisventils und des Bremsdruckregelventils mit Druckmittel dient ein für beide Ventile gemeinsamer Druckmittelanschluß. Der Abbau des Druckes in der Steuerkammer des Relaisventils und in der Druckmittelausgangskammer des Bremsdruckregelventils erfolgt über einen im Gehäuse des Bremsdruckregelventils angeordneten Entlüftungsraum und eine Öffnung in der Gehäusewand des Bremsdruckregelventils. Der Abbau des Druckes in der Druckmittelausgangskammer des Relaisventils erfolgt über einen Druckmittelauslaß des Relaisventils.

Das Einstellen der Regelgröße von Leerlast bis Vollast erfolgt bei dieser Bremskraftregeleinrichtung selbsttätig, indem eine mit einer Steuerwelle verbundene Steuerscheibe, die eine schräge Fläche aufweist, das Stellglied verschiebt, welches mit dem kombinierten Einlaß- und Auslaßventil zusammenwirkt. Je nach Stellung der Steuerscheibe und somit auch je nach Stellung des auf der schrägen Fläche der Steuerscheibe aufliegenden Stellgliedes wird von dem Bremsdruckregelventil ein als Steuerdruck für das dem Bremsdruckregelventil nachgeschaltete Relaisventil dienender Druck ausgesteuert und der Steuerkammer des Relaisventils zugeführt. Vom Relaisventil wird dann ein Druck ausgesteuert, der bei der gegebenen Beladung für die Abbremsung des Fahrzeugs erforderlich ist.

Die aus der Steuerwelle und der Steuerscheibe bestehende Antriebseinrichtung für das Stellglied des Bremsdruckregelventils ist quer zur Längsachse von Stellglied, Einlaß- und Auslaßventil und Bremsdruckregelkolben angeordnet.

Durch die Anordnung der Steuerwelle und der Steuerscheibe quer zur Längsachse des Stellgliedes läßt es sich nicht vermeiden, daß von der Steuerscheibe Querkräfte auf das Stellglied ausgeübt werden.

Der Erfindung liegt die Aufgabe zugrunde, eine Bremskraftregeleinrichtung der eingangs erwähnten Art zu verbessern.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die erfindungsgemäße Bremskraftregeleinrichtung bietet neben kleineren Abmessungen insbesondere den Vorteil, daß durch die gleichachsige Anordnung des Stellelementes bzw. Betätigungselementes zum Stellglied und die gleiche Bewegungsrichtung von Stellelement bzw. Betätigungselement und Stellglied die Einleitung von Querkräften auf das Stellglied und auch auf das Stellelement bzw. Betätigungselement vermieden wird.

Gemäß einer vorteilhaften Weiterbildung der erfindungsgemäßen Bremskraftregeleinrichtung ist die mit dem Stellelement und dem Betätigungselement zusammenwirkende Steuerkurve der Antriebseinrichtung an einem Lagerbock angeordnet, dessen Lage relativ zum Stellelement und zum Betätigungselement veränderbar ist. Durch Verändern der Lage des Lagerbockes läßt sich die Position des das Stellelement mit einem Teil des Fahrzeugs verbindenden Hebels zur Steuerkurve und somit die Kennlinie des vom Bremsdruckregelventil ausgesteuerten Druckes zur Winkellage des Hebels justieren.

Das Bremsdruckregelventil kann auch mit einer mit Druckmittel betätigten Antriebseinrichtung für das Stellglied ausgerüstet werden. Bei einer solchen Ausführungsform des Bremsdruckregelventils kann in vorteilhafter Weise der bereits vorhandene Raum zur Aufnahme der mechanisch betätigbaren Antriebseinrichtung als Aufnahme für ein mit einem Druckmittel beaufschlagbares Betätigungsglied dienen, da die Bewegungsrichtung des Stellelementes der mechanisch betätigbaren Antriebseinrichtung gleich ist der Bewegungsrichtung des mit einem Druckmittel beaufschlagten Betätigungsgliedes.

Vorteilhafterweise kann das Bremsdruckregelventil auch mit einem elektrischen Antrieb für das lastabhängig betätigbare Stellglied ausgerüstet werden.

Auch bei einer solchen Ausführungsform kann die bereits vorhandene Gehäuseausnehmung zur Aufnahme der Antriebseinrichtung dienen.

Gemäß einer vorteilhaften Weiterbildung des Erfindungsgegenstandes ist direkt am Stellelement eine Steuerkurve angeordnet, die mit einer an einem Gleitstück angeordneten weiteren Steuerkurve in der Weise zusammenwirkt, daß bei einer Drehbewegung des Stellelementes um seine Längsachse, je nach Drehrichtung, das zwischen dem Stellelement und dem Stellglied des Bremsdruckregelventils angeordnete Gleitstück vom Stellelement in Richtung auf das Einlaß- und Auslaßventil des Bremsdruckregelventils zu verschoben wird, wobei das Stellglied des Bremsdruckregelventils vom Gleitstück und indirekt vom Stellelement in Richtung auf das Einlaß- und Auslaßventil zu und von einer Rückstellkraft, z. B. einem Druckmittel, in Richtung vom Einlaß- und Auslaßventil weg verschoben wird.

Gemäß einer weiteren vorteilhaften Weiterbildung des Erfindungsgegenstandes ist in der Mantelfläche des Stellelementes eine quer zur Längsachse des Stellelementes verlaufende Steuerkurve angeordnet, mit der ein am Lagerbock oder am Gehäuse angeordnetes stiftartiges Bauteil in der Weise zusammenwirkt, daß bei einer Drehbewegung des Stellelementes um seine Längsachse, je nach Drehrichtung, das Stellelement sich in Richtung auf das Einlaß- und Auslaßventil des Bremsdruckregelventils zu bzw. von diesem weg bewegt, wobei das Stellglied des Bremsdruckregelventils vom Stellelement in Richtung auf das Einlaß- und Auslaßventil zu und von einer Rückstellkraft, z. B. einem Druckmittel, in Richtung vom Einlaß- und Auslaßventil weg verschoben wird.

Vorteilhafterweise kann das stiftartige Bauteil an einem zapfenartigen Bauteil angeordnet sein, welches um seine Längsachse drehbar am Lagerbock oder am Gehäuse angeordnet ist. Durch diese Anordnung des stiftartigen Bauteiles ist es möglich, das Stellelement in Richtung der Längsachse des Stellgliedes auf dieses zu oder von diesem weg zu verstellen.

Als Lagerbock für das Stellelement oder den als Stellelement dienenden Kolben kann vorteilhafterweise auch der die Öffnung oder auch Gehäuseausnehmung zur Aufnahme der Antriebseinrichtung aufweisende Bereich des Gehäuses dienen, so daß auf den Lagerbock bildende zusätzliche Bauteile verzichtet werden kann.

Anhand der Zeichnung werden nachfolgend fünf Ausführungsbeispiele der Erfindung näher erläutert.

Es zeigen:
- Fig. 1: eine aus einem Relaisventil und einem Bremsdruckregelventil bestehende lastabhängig steuerbare Bremskraftregeleinrichtung, wobei das Bremsdruckregelventil mechanisch gesteuert wird;
- Fig. 2: die Antriebseinrichtung für den Stößel des Bremsdruckregelventils der in Fig. 1 gezeigten Bremskraftregeleinrichtung;
- Fig. 3: die Einrichtung zum Justieren der Antriebseinrichtung für den Stößel des Bremsdruckregelventils;
- Fig. 4: einen Ausschnitt der in Fig. 1 gezeigten Bremskraftregeleinrichtung, wobei deren Bremsdruckregelventil pneumatisch gesteuert wird;
- Fig. 5: einen Ausschnitt der in Fig. 1 gezeigten Bremskraftregeleinrichtung, wobei deren Bremsdruckregelventil elektrisch gesteuert wird;
- Fig. 6: eine Antriebseinrichtung für den Stößel des Bremsdruckregelventils, die gegenüber der Antriebseinrichtung gemäß Fig. 1 einen einfacheren Aufbau aufweist;
- Fig. 7: eine weitere.Antriebseinrichtung für den Stößel des Bremsdruckregelventils und
- Fig. 8: einen Ausschnitt der Antriebseinrichtung gemäß Fig. 7, welcher die Steuerkurven der Antriebseinrichtung in perspektivischer Ansicht zeigt.

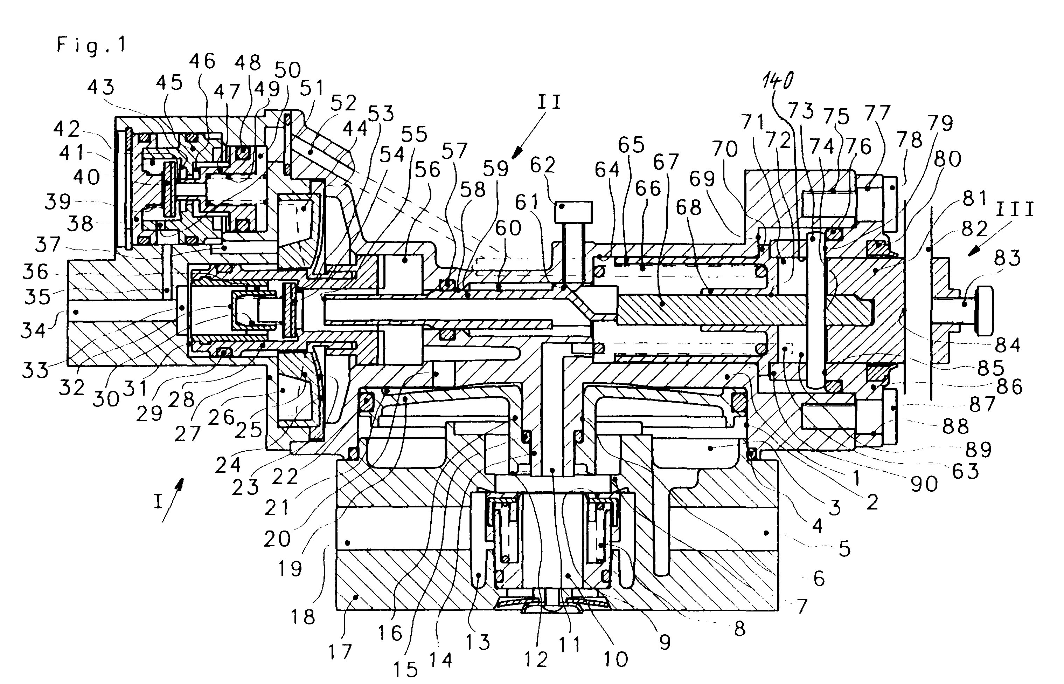

In Fig. 1 ist eine lastabhängig steuerbare Bremskraftregeleinrichtung dargestellt, die aus einem Bremsdruckregelventil (II) und einem Relaisventil (I) besteht.

Das Relaisventil (I) besitzt ein aus einem unteren ersten Gehäuseteil (17) und einem mit diesem verbundenen oberen zweiten Gehäuseteil (1, 2) bestehendes Gehäuse (17, 1, 2). Das zweite Gehäuseteil (1, 2) ist ein Teil des Gehäuses des Bremsdruckregelventils (II), so daß das Relaisventil (I) und das Bremsdruckregelventil (II) eine gemeinsame Gehäusewand (1) besitzen. Die Gehäusewand (1) weist einen zum unteren Gehäuseteil (17) hin offenen topfförmigen Bereich (2) auf. Zwischen den einander zugewandten Stirnflächen des ersten Gehäuseteiles (17) und des topfförmigen zweiten Gehäuseteiles (1, 2) ist ein Dichtring (4) angeordnet. Mittels nicht dargestellter Verbindungsmittel, wie z. B. Schrauben, sind das erste Gehäuseteil (17) und das zweite Gehäuseteil (1, 2) miteinander verbunden.

Im Gehäuse (17, 1, 2) des Relaisventils (I) sind eine Druckmitteleingangskammer (13), eine Druckmittelausgangskammer (3) und ein zu einer Druckmittelsenke hin führender Druckmittelauslaß (10) angeordnet. Die Druckmittelausgangskammer (3) ist über ein im Gehäuse (17, 1, 2) angeordnetes kombiniertes Einlaß- und Auslaßventil (7, 9, 12) wahlweise mit der Druckmitteleingangskammer (13) oder mit dem Druckmittelauslaß (10) verbindbar oder gegen beide absperrbar. Das kombinierte Einlaß- und Auslaßventil (7, 9, 12) besteht aus einem im Gehäuse (17, 1, 2) angeordneten ringförmigen Einlaßsitz (7), einem koaxial zu diesem angeordneten Auslaßsitz (12) und einem relativ zum Einlaßsitz (7) und zum Auslaßsitz (12) in Richtung der Längsachse des Gehäuses (17, 1, 2) bewegbaren ringförmigen Ventilschließglied (9) . Das Ventilschließglied (9) wird von einer Feder (8), die sich mit ihrem einen Ende an einer Führung für das Ventilschließglied (9) abstützt, in Richtung auf den Einlaßsitz (7) und den Auslaßsitz (12) zu beaufschlagt und am Einlaßsitz (7) gehalten.

An der dem Gehäuseinnenraum des Relaisventils (I) zugewandten Seite der Gehäusewand (1) des oberen zweiten Gehäuseteiles (1, 2) ist ein sich in Richtung auf das kombinierte Einlaß- und Auslaßventil (7, 9, 12) zu erstreckender zapfenartiger Vorsprung (14) angeordnet, der eine in Richtung seiner Längsachse verlaufende Durchgangsöffnung (11) aufweist, die sich durch die Gehäusewand (1) hindurch erstreckt.

Zur Betätigung des kombinierten Einlaß- und Auslaßventils (7, 9, 12) dient ein Relaiskolben (19), der im Gehäuse (17, 1, 2) in Richtung der Längsachse des Gehäuses (17, 1, 2) bewegbar angeordnet ist. Der Relaiskolben (19) besitzt eine Durchgangsöffnung (6), die von einem sich in Richtung auf das Einlaß- und Auslaßventil (7, 9, 12) zu erstreckenden rohrförmigen Fortsatz (16) des Relaiskolben (19) begrenzt wird. In die Durchgangsöffnung (6) des Relaiskolbens (19) erstreckt sich der zapfenartige Vorsprung (14) des Gehäuses (17, 1, 2) hinein. Auf dem Umfang des Relaiskolbens (19) ist ein Dichtring (22) angeordnet, der dichtend an der Wand des Gehäuses (17, 1, 2) anliegt. Ein weiterer Dichtring (15) ist auf dem Umfang des zapfenartigen Vorsprungs (14) der Gehäusewand (1) angeordnet und liegt dichtend an der Wand des die Durchgangsöffnung (6) des Relaiskolbens (19) begrenzenden rohrförmigen Fortsatzes (16) an. Das dem Ventilschließglied (9) des kombinierten Einlaß- und Auslaßventils (7, 9, 12) zugewandte Ende des rohrförmigen Fortsatzes (16) des Relaiskolbens (19) ist als Auslaßsitz (12) für das Auslaßventil (9, 12) des kombinierten Einlaß- und Auslaßventils (7, 9, 12) ausgebildet.

Der Relaiskolben (19) begrenzt mit seiner dem kombinierten Einlaß- und Auslaßventil (7, 9, 12) zugewandten Seite die Druckmittelausgangskammer (3) und mit seiner der Druckmittelausgangskammer (3) abgewandten Seite eine Steuerkammer (21). Die Druckmitteleingangskammer (13) ist über einen Druckmitteleingang (18) und eine nicht dargestellte Druckmittelleitung mit einer Druckmittelquelle, wie z. B. einem Druckluft-Vorratsbehälter, verbunden und die Druckmittelausgangskammer (3) steht über einen Druckmittelausgang (5) und eine nicht dargestellte Druckmittelleitung mit einem Verbraucher, wie z. B. einem Bremszylinder, in Verbindung. Der Druckmittelauslaß (10) ist mit einer Druckmittelsenke, z. B. der Atmosphäre, verbunden.

Mit dem Gehäuse (17, 1, 2) des Relaisventils (I) ist ein aus einem ersten Gehäuseteil und einem zweiten Gehäuseteil (27) bestehendes Gehäuse (1, 27) des Bremsdruckregelventils (II) verbunden, wobei das Gehäuse (17, 1, 2) des Relaisventils (I) und das Gehäuse (1, 27) des Bremsdruckregelventils (II) so zueinander angeordnet sind, daß die Längsachse des Gehäuses (1, 27) des Bremsdruckregelventils (II) quer zur Längsachse des Gehäuses (17, 1, 2) des Relaisventils (I) verläuft. Das erste Gehäuseteil des Bremsdruckregelventils (II) wird von der Wand (1) des oberen Gehäuseteiles des Relaisventils (I) gebildet.

Im Gehäuse (1, 27) des Bremsdruckregelventils (II) ist ein als Stufenkolben ausgebildeter Bremsdruckregelkolben (28, 24), der aus einem als Hohlkolben ausgebildeten Kolben (28) und einer mit diesem verbundenen Membran (24) besteht, in Richtung der Längsachse des Gehäuses (1, 27) bewegbar angeordnet. Die Membran (24) ist mit ihrem äußeren Randbereich zwischen dem ersten Gehäuseteil (1) und dem zweiten Gehäuseteil (27) eingespannt. Der Kolben (28) ist in einer Gehäuseausnehmung mittels eines Dichtringes (29) abgedichtet verschiebbar angeordnet. Im Hohlraum des Kolbens (28) ist ein Einlaßsitz (53) angeordnet, der mit einem ebenfalls im Hohlraum des Kolbens (28) angeordneten Ventilschließglied (54) ein Einlaßventil. (53, 54) bildet. Das Ventilschließglied (54) wird von einer Feder (30) in Richtung auf den Einlaßsitz (53) zu beaufschlagt und an diesem gehalten. Mit ihrem dem Ventilschließglied (54) abgewandten Ende stützt die Feder (30) sich an einem im Kolben (28) angeordneten topfförmigen Teil (32) ab, welches über Stege (36) mit dem Kolben (28) verbunden ist. An dem Kolben (28) sind mehrere sich radial nach außen, vom Kolben (28) weg erstreckende Rippen (26) angeordnet, deren der Membran (24) zugewandte Stirnflächen Teile eines Kegelmantels bilden. Im Gehäuse (1, 27) ist ein Einlegering fest angeordnet, der mehrere sich radial nach innen erstreckende Rippen (25) aufweist, in deren Zwischenräume die Rippen (26) des Kolbens (28) berührungslos eingreifen und deren der Membran (24) zugewandte Stirnflächen Teile eines entgegengesetzt verlaufenden Kegelmantels bilden. Der Bremsdruckregelkolben (28, 24) weist so eine konstante Wirkfläche (31) und eine unter der Bewegung des Bremsdruckregelkolbens (28, 24) veränderliche Wirkfläche (23) auf.

An dem zweiten Gehäuseteil (27) des Gehäuses (1, 27) des Bremsdruckregelventils (II) ist seitlich ein Vorsteuerventil angeordnet, welches ein einstückig mit dem Gehäuse (1, 27) des Bremsdruckregelventils (II) ausgebildetes Gehäuse aufweist. Das Gehäuse wird von einem Deckel (38) verschlossen, wobei zwischen Deckel (38) und Gehäuse ein Dichtring angeordnet ist.

Im Gehäuse des Vorsteuerventils ist ein als Hohlkolben ausgebildeter Vorsteuerkolben (47) mittels eines Dichtrings (48) abgedichtet in Richtung der Längsachse des Gehäuses bewegbar angeordnet. Der Vorsteuerkolben (47) trägt einen Auslaßsitz (42), der mit einem im Gehäuse geführten Ventilschließglied (40) ein Auslaßventil (42, 40) eines kombinierten-Einlaß- und Auslaßventils (43, 40, 42) bildet. Mit einem gehäusefesten Einlaßsitz (43) bildet das Ventilschließglied (40) ein Einlaßventil (43, 40) des kombinierten Einlaß- und Auslaßventils (43, 40, 42). Der ringförmige Einlaßsitz (43) ist in einem Gehäuseeinsatz (45) des Vorsteuerventils angeordnet, welcher mittels eines auf seinem Umfang angeordneten Dichtringes abgedichtet im Gehäuse des Vorsteuerventils angeordnet ist. Eine Feder (49), die sich mit ihrem einen Ende am Gehäuse abstützt, beaufschlagt mit ihrem anderen Ende den Vorsteuerkolben (47) in Richtung auf das Ventilschließglied (40) zu und hält den Auslaßsitz (42) am Ventilschließglied (40). Das Einlaßventil (43, 40) befindet sich dabei in seiner Offenstellung. Das Ventilschließglied (40) wird von einer weiteren Feder (39), die sich am Deckel (38) abstützt, in Richtung auf den Auslaßsitz (42) und den Einlaßsitz (43) zu beaufschlagt. Über das kombinierte Einlaß- und Auslaßventil (43, 40, 42) ist eine Vorsteuerkammer (46) des Vorsteuerventils in Abhängigkeit von der Stellung des Vorsteuerkolbens (47) mit einer Eingangskammer (41) oder mit einer Auslaßkammer (50) des Vorsteuerventils verbindbar oder gegen beide absperrbar. Die Eingangskammer (41) des Vorsteuerventils ist über eine in der Wand des Gehäuseeinsatzes (45) angeordnete Durchgangsöffnung (51) und eine in der Wand des Gehäuseteiles (27) angeordnete Druckmittelleitung (35), die als Gehäusekanal ausgebildet ist, mit einem Steuereingang (34) des Bremsdruckregelventils (II). verbunden. Der Steuereingang (34) steht mit einer Eingangskammer (33) des Bremsdruckregelventils (II) in Verbindung, die von der konstanten Wirkfläche (31) des Bremsdruckregelkolbens (28, 24) begrenzt wird. Über eine als Gehäusekanal ausgebildete weitere Druckmittelleitung (37) im Gehäuseteil (27) ist eine von der Membran (24) des Bremsdruckregelkolbens (28, 24) begrenzte Steuerkammer (44) mit der Vorsteuerkammer (46) verbunden. Von der der Steuerkammer (44) abgewandten Seite des Bremsdruckregelkolbens (28, 24) wird eine als Arbeitskammer dienende Druckmittelausgangskammer (56) des Bremsdruckregelventils (II) begrenzt. Die Druckmittelausgangskammer (56) des Bremsdruckregelventils (II) ist über eine Druckmittelleitung (20), die von einer die Gehäusewand (1) des ersten Gehäuseteiles des Bremsdruckregelventils (II) durchdringenden Durchgangsöffnung gebildet wird, mit der Steuerkammer (21) des Relaisventils (I) verbunden.

Im ersten Gehäuseteil des Gehäuses (1, 27) des Bremsdruckregelventils (II) ist ein als lastabhängig verstellbares Stellglied (59) für das Bremsdruckregelventil (II) dienender hohler Stößel in Richtung der Längsachse des Gehäuses (1, 27) des Bremsdruckregelventils (II) und somit quer zur Längsachse des Relaisventils (I) bewegbar angeordnet. Das Stellglied (59) ist an seinem dem kombinierten Einlaß- und Auslaßventil (53, 54, 55) zugewandten Ende als Auslaßsitz (55) ausgebildet und bildet mit dem Ventilschließglied (54) ein Auslaßventil (55, 54) des kombinierten Einlaß- und Auslaßventils (53, 54, 55).

Die Gehäusewand des ersten Gehäuseteiles des Gehäuses (1, 27) weist einen sich in Richtung auf das Stellglied (59) zu erstreckenden und das Stellglied (59) umgebenden ringförmigen Vorsprung auf, der als Führung (58) für das Stellglied (59) dient. Die Führung (58) besitzt auf ihrer dem Stellglied (59) zugewandten Seite eine umlaufende Nut, in welcher ein Dichtring (57) angeordnet ist, der an der äußeren Mantelfläche des Stellgliedes (59) dichtend anliegt. Der Dichtring (57) dichtet die Druckmittelausgangskammer (56) und eine als Entlüftungsraum (60) dienende Kammer gegeneinander ab. Der Entlüftungsraum (60) ist über die als Druckmittelleitung dienende Durchgangsöffnung (11) des den Relaiskolben (19) durchdringenden Fortsatzes (14) der Gehäusewand (1) und den Druckmittelauslaß (10) des Relaisventils (I) mit der Druckmittelsenke verbunden. Eine im Gehäuse (1, 27) angeordnete, als Gehäusekanal ausgebildete Druckmittelleitung (52) verbindet die Auslaßkammer (50) des Vorsteuerventils mit dem Entlüftungsraum (60).

Das erste Gehäuseteil des Bremsdruckregelventils (II) weist eine in Richtung der Längsachse des Gehäuses (1, 27) verlaufende und sich zum freien Ende des Gehäuses (1, 27) hin erweiternde abgestufte Öffnung (64) auf. In der Öffnung (64) ist eine Antriebseinrichtung (III) für das Stellglied (59) angeordnet.

Die Antriebseinrichtung (III) besitzt einen Lagerbock (90, 86), der von einem abgestuft ausgebildeten und mit einem Flansch (86) versehenen rohrförmigen Körper (90) gebildet wird. Der Lagerbock (90, 86) besitzt somit eine in Richtung der Längsachse von Stellglied (59) sowie Einlaßventil (53, 54) und Auslaßventil (55, 54) verlaufende Öffnung (140) bzw. Durchgangsöffnung. In zwei einander gegenüberliegenden Bereichen des Flansches (86) ist je ein als Langloch ausgebildeter Schlitz (77 und 88) angeordnet, wobei jeder Schlitz (77 bzw. 88) zur Aufnahme eines von einer Schraube gebildeten Befestigungselementes (78 und 87) dient. Mittels der in Gewindebohrungen (75) des Gehäuses (1, 27) eingeschraubten Befestigungselemente (78 und 87) wird die Antriebseinrichtung (III) am Gehäuse (1, 27) des Bremsdruckregelventils (II) gehalten. Auf dem den kleineren Durchmesser aufweisenden Bereich des rohrförmigen Körpers (90) ist ein Dichtring (76) angeordnet, der dichtend an der Wand des den größeren Durchmesser aufweisenden Bereiches der Öffnung (64) anliegt. Im rohrförmigen Körper (90) ist ein als rotationssymmetrischer Körper ausgebildetes Stellelement (81) um seine Längsachse drehbar angeordnet. Das Stellelement (81) besitzt auf seiner dem Innenraum des Gehäuses (1, 27) zugewandten Seite einen rohrförmigen Fortsatz (65), der sich in die abgestufte Öffnung (64) hinein, in Richtung auf das dem kombinierten Einlaß- und Auslaßventil (53, 54, 55) abgewandte Ende des Stellgliedes (59) zu erstreckt. Auf seinem Umfang besitzt der rohrförmige Fortsatz (65) einen umlaufenden Vorsprung (70), mit welchem der rohrförmige Fortsatz (65) und somit das Stellelement (81) einerseits an einer Schulter (69) des Gehäuses (1, 27) und andererseits am rohrförmigen Körper (90) des Lagerbockes (90, 86) anliegt. Mittels des Lagerbockes (90, 86) und der Schulter (69) des Gehäuses (1, 27) wird das Stellelement (81) gegen eine Bewegung in Richtung seiner Längsachse gesichert.

Im Stellelement (81) ist zentrisch eine Ausnehmung (72) angeordnet, die in Richtung der Längsachse des Stellelementes (81) verläuft. An die Ausnehmung (72) schließt ein koaxial z-um rohrförmigen Fortsatz (65) am Stellelement (81) angeordnetes Rohr (68) an, das sich in Richtung auf das Stellglied (59) zu erstreckt. In der Ausnehmung (72) und dem Rohr (68) ist ein als Betätigungselement (67) für das Stellglied (59) dienender weiterer Stößel in Richtung auf das lastabhängig verstellbare Stellglied (59) zu bzw. von diesem weg bewegbar angeordnet. In seinem im Stellelement (81) gelegenen Endbereich besitzt das Betätigungselement (67) eine quer zu seiner Längsachse verlaufende Durchgangsöffnung (74), in welcher ein Stift (73) befestigt ist. Das Stellelement (81) besitzt einander gegenüberliegend zwei in Richtung seiner Längsachse verlaufende, als Führung für den Stift (73) und somit als Verdrehsicherung für das Betätigungselement (67) dienende Schlitze (89 und 71), durch welche der Stift (73) mit seinen aus dem Betätigungselement (67) herausragenden Bereichen hindurchgeführt ist.

Der das Stellelement (81) aufnehmende rohrförmige Körper (90) des Lagerbockes (90, 86) weist einander gegenüberliegend zwei als Kurvenbahnen (79 und 85) ausgebildete, quer zu seiner Längsachse verlaufende Durchgangsöffnungen auf, in welche sich die Enden des Stiftes (73) hineinerstrecken. Im rohrförmigen Fortsatz (65) des Stellelementes (81) ist koaxial zum Betätigungselement (67) eine Drehfeder (66) angeordnet, die sich mit ihrem einen Ende in einer Bohrung des Gehäuses (1, 27) abstützt und mit ihrem anderen Ende in eine Bohrung (63) des Stellelementes (81) eingreift. Das aus dem Gehäuse (1, 27) herausgeführte und aus dem rohrförmigen Körper (90) herausragende Ende des Stellelementes (81) besitzt eine quer zu seiner Längsachse verlaufende Durchgangsöffnung (84), durch welche eine als Hebel (82) dienende Stange mit ihrem einen Ende hindurchgeführt ist. Mittels einer als Klemmelement dienenden, in die Stirnseite des Stellelementes (81) eingedrehten Schraube (83) ist der Hebel (82) in der Durchgangsöffnung (84) festgeklemmt. An dem freien Ende des rohrförmigen Körpers (90) des Lagerbockes (90, 86) ist ein Dichtring (80) angeordnet, der einerseits an der Mantelfläche des Stellelementes (81) und andererseits an der dem Stellelement (81) zugewandten Wand des Lagerbockes (90, 86) dichtend anliegt.

In die Wand des Gehäuses (1, 27) ist eine Schraube (62) eingedreht, an welcher das Stellglied (59) bei einer Bewegung in Richtung seiner Längsachse mit einem am Stellglied (59) angeordneten Vorsprung (61) zur Anlage bringbar ist. Die Schraube (62) dient als Anschlag, mittels welchem der Hub des Stellgliedes (59) in Richtung vom kombinierten Einlaß- und Auslaßventil (53, 54, 55) des Bremsdruckregelventils (II) weg begrenzt wird.

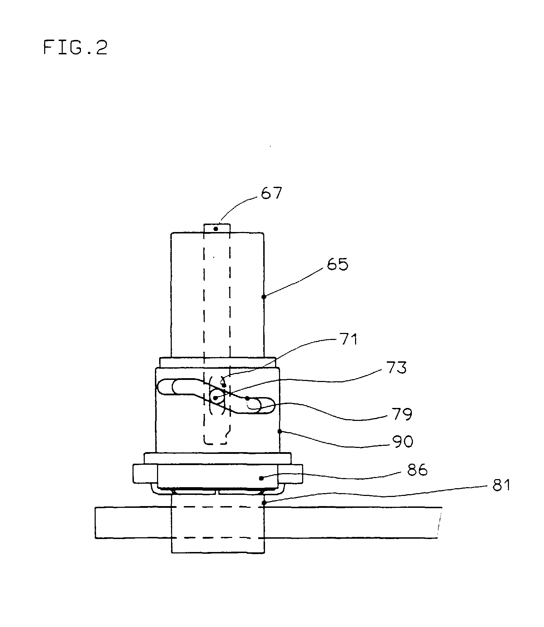

Figur 2 zeigt die Antriebseinrichtung (III) zum Verstellen des Stellgliedes (59). Da diese Antriebseinrichtung (III) gleich ist der in Figur 1 dargestellten Antriebseinrichtung (III), sind der besseren Übersicht halber gleiche Bauteile mit gleichen Bezugsziffern versehen.

In dem den Flansch (86) aufweisenden rohrförmigen Körper (90) des Lagerbockes (90, 86) ist das Stellelement (81), welches den rohrförmigen Fortsatz (65) besitzt, um seine Längsachse drehbar gelagert. An die im Stellelement (81) zentrisch angeordnete Ausnehmung schließt das Rohr an, welches zur Führung des Betätigungselementes (67) für das Stellglied dient. Der am Betätigungselement (67) befestigte Stift (73) erstreckt sich durch die im Stellelement (81) angeordneten Schlitze (71, 89) hindurch in die als Kurvenbahnen (79, 85) dienenden, quer zur Längsachse des rohrförmigen Körpers (90) verlaufenden und wenigstens einen schräg zur Längsachse des rohrförmigen Körpers (90) verlaufenden Bereich aufweisenden Durchgangsöffnungen des rohrförmigen Körpers (90) hinein. In Fig. 2 ist lediglich ein Schlitz (71) und eine Kurvenbahn (79) erkennbar.

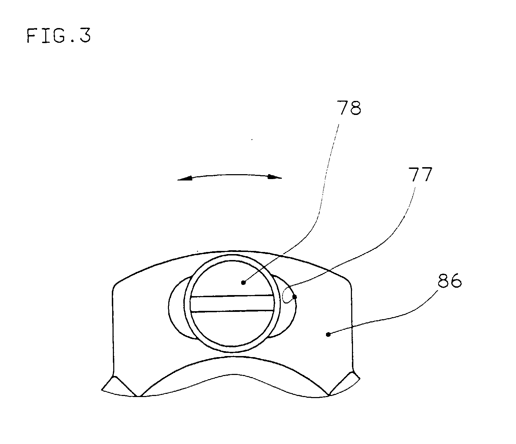

Figur 3 zeigt einen Ausschnitt der dem Gehäuse abgewandten Stirnseite des Flansches (86) der Antriebseinrichtung (III) zum Verstellen des Stellgliedes. Die im Flansch (86) angeordneten Schlitze (88 und 77), von denen in Fig. 3 nur einer dargestellt ist, sind bogenförmig ausgebildet, wobei beide Schlitze (88 und 77) auf demselben Radius um die Längsachse des rohrförmigen Körpers liegen. Durch die Schlitze (88 und 77) sind die als Befestigungselemente (78 und 87) für die Antriebseinrichtung (III) am Gehäuse dienenden Schrauben hindurchgeführt.

Der Lagerbock (90, 86) für das Stellelement (81) kann selbstverständlich auch von einem Teil des Gehäuses (1, 27) gebildet werden. Die im. Lagerbock (90, 86) angeordnete Kurvenbahn (79, 85) kann dann direkt in der Wand des Gehäuses (1, 27) angeordnet sein. Der am Betätigungselement (67) angeordnete Stift (73) kann auch von stiftartigen Anformungen am Betätigungselement (67) gebildet werden.

Die Funktion der im Vorstehenden beschriebenen lastabhängig steuerbaren Bremskraftregeleinrichtung wird nachfolgend näher erläutert.

Es wird angenommen, daß die Bremskraftregeleinrichtung in der Bremsanlage eines Fahrzeugs angeordnet ist, wobei der Druckmitteleingang (18) des Relaisventils (I) mit einem Druckluft-Vorratsbehälter und der Druckmittelausgang (5) des Relaisventils (I) mit den Bremszylindern eine Achse des Fahrzeuges verbunden ist. Der Steuereingang (34) des Bremsdruckregelventils (II) der Bremskraftregeleinrichtung steht mit einem Ausgang eines Bremsventils, z.B. Motorwagenbremsventils, in Verbindung. Die Bremskraftregeleinrichtung ist am Fahrzeugaufbau angeordnet und das freie Ende des Hebels (82) ist über ein Seil mit der Achse des Fahrzeugs verbunden. Bei nicht beladenem Fahrzeug befinden das Stellglied (59) und die Antriebseinrichtung (III) des Bremsdruckregelventils (II) sich in der in Fig. 1 gezeigten Stellung.

Bei nichtbetätigter Bremse befindet das Einlaßventil (7, 9) des Relaisventils (I) sich in seiner Schließstellung und das Auslaßventil (9, 12) des Relaisventils (I) ist geöffnet. Ebenso ist das Einlaßventil (53, 54) des Bremsdruckregelventils (II) geschlossen und das Auslaßventil (54, 55) des Bremsdruckregelventils (II) ist geöffnet. Das Einlaßventil (43, 40) des Vorsteuerventils ist geöffnet und das Auslaßventil (42, 40) des Vorsteuerventils ist geschlossen.

Wenn das Motorwagen-Bremsventil betätigt wird, gelangt der von diesem ausgesteuerte Bremssteuerdruck über den Steuereingang (34) in die Druckmitteleingangskammer (33) des Bremsdruckregelventils (II) und gleichzeitig über die Druckmittelleitung (35) und das geöffnete Einlaßventil (43, 40) des Vorsteuerventils in die Vorsteuerkammer (46), von welcher der Bremssteuerdruck über die Druckmittelleitung (37) (Gehäusekanal) in die Steuerkammer (44) des Bremsdruckregelventils (II) gelangt.

Bei Erreichen eines bestimmten, auf den Vorsteuerkolben (47) einwirkenden Bremssteuerdruckes, bewegt sich der Vorsteuerkolben (47) gegen die Kraft der Feder (49) in Richtung von der Vorsteuerkammer (46) weg, wodurch das Einlaßventil (43, 40) in seine Schließstellung gelangt.

Gleichzeitig mit den vorstehend beschriebenen Vorgängen wirkt der Bremssteuerdruck in der Steuerkammer (44) des Bremsdruckregelventils (II) auf den aus dem Kolben (28) und der Membran (24) bestehenden Bremsdruckregelkolben (28, 24), wodurch sich dieser abwärts, in Richtung auf die Druckmittelausgangskammer (56) des Bremsdruckregelventils (II) zu bewegt. Die Membran (24) löst sich während der Abwärtsbewegung des Kolbens (28) von den im Gehäuse (1, 27) angeordneten Rippen (25) und legt sich im zunehmenden Maße an die Rippen (26) des Kolbens (28) an. Die wirksame Membranfläche wird so laufend vergrößert, bis sie die Fläche der Kolbenoberseite überwiegt. Dabei setzt das Ventilschließglied (54) des kombinierten Einlaß- und Auslaßventils (53, 54, 55) auf die als Auslaßsitz (55) ausgebildete Stirnfläche des Stellgliedes (59) auf, wenn der Bremsdruckregelkolben (28, 24) einen vorbestimmten Weg zurückgelegt hat. Das Auslaßventil (54, 55) ist dann geschlossen. Bei der weiteren Bewegung des Bremsdruckregelkolbens (28, 24) in derselben Richtung hebt das Stellglied (59) das Ventilschließglied (54) vom Einlaßsitz (53) ab. Das Einlaßventil (53, 54) ist dann geöffnet. Von der Eingangskammer (33) gelangt dann der Bremssteuerdruck durch das geöffnete Einlaßventil (53, 54) in die Druckmittelausgangskammer (56). Wenn die vom Druck in der Druckmittelausgangskammer (56) auf den Bremsdruckregelkolben (24, 28) ausgeübte Kraft gleich ist der vom Druck in der Steuerkammer (44) und in der Druckmitteleingangskammer (33) auf den Bremsdruckregelkolben (24, 28) entgegengerichtet einwirkenden Kraft, bewegt der Bremsdruckregelkolben (24, 28) sich in Richtung auf die Steuerkammer (44) zu. Dabei gelangt das Einlaßventil (53, 54) in seine Schließstellung. Eine Abschlußstellung des Bremsdruckregelventils (II) ist erreicht.

Gleichzeitig mit der Druckeinsteuerung in die Druckmittelausgangskammer (56) des Bremsdruckregelventils (II) gelangt durch die Druckmittelleitung (20) Druckmittel aus der Druckmittelausgangskammer (56) des Bremsdruckregelventils (II) in die Steuerkammer (21) des Relaisventils (I). Der sich in der Steuerkammer (21) aufbauende Bremssteuerdruck bewirkt dann eine Bewegung des Relaiskolbens (19) in Richtung auf die Druckmittelausgangskammer (3) des Relaisventils (I) zu. Wenn der Relaiskolben (19) einen vorbestimmten Weg zurückgelegt hat, setzt der am rohrförmigen Fortsatz (16) des Relaiskolbens (19) angeordnete Auslaßsitz (12) des kombinierten Einlaß- und Auslaßventils (7, 9, 12) des Relaisventils (I) auf das Ventilschließglied (9) auf. Das Auslaßventil (9, 12) des Relaisventils (I) ist dann geschlossen. Bei der weiteren Bewegung des Relaiskolbens (19) in Richtung auf die Druckmittelausgangskammer (3) zu wird das Ventilschließglied (9) mittels des rohrförmigen Fortsatzes (16) des Relaiskolbens (19) vom Einlaßsitz (7) abgehoben. Das Einlaßventil (7, 9) ist dann geöffnet und von der Druckmitteleingangskammer (13) des Relaisventils (I) strömt dann durch das geöffnete Einlaßventil (7, 9) Vorratsdruckmittel in die Druckmittelausgangskammer (3). Von der Druckmittelausgangskammer (3) gelangt das Druckmittel dann durch den Druckmittelausgang (5) und eine nicht dargestellte, mit dem Druckmittelausgang (5) verbundene Druckmittelleitung zu den Bremszylindern.

Ist der Druck in den Bremszylindern und somit in der Druckmittelausgangskammer (3) soweit angestiegen, daß sich zwischen den einander entgegengerichtet auf den Relaiskolben (19) einwirkenden Kräften des Druckes in der Druckmittelausgangskammer (3) und in der Steuerkammer (21) ein Kräftegleichgewicht einstellt, bewegt der Relaiskolben (19) sich in Richtung auf die Steuerkammer (21) zu. Dabei gelangt das Einlaßventil (7, 9) in seine Schließstellung, wodurch eine Abschlußstellung des Relaisventils (I) erreicht ist. Der jetzt in den Bremszylindern herschende Druck entspricht dem in Abhängigkeit vom Beladungsgewicht über das Bremsdruckregelventil (II) geregelten Druck.

Soll der Bremsvorgang beendet werden, wird das Motorwagen-Bremsventil in seine entlüftende Stellung gebracht. Der Druck in der Eingangskammer (33) des Bremsdruckregelventils (II) baut sich über das Motorwagen-Bremsventil zur Atmosphäre hin ab. Aufgrund des sich abbauenden Druckes in der Druckmitteleingangskammer (33) des Bremsdruckregelventils (II) bewegt der Bremsdruckregelkolben (28, 24) sich in Richtung auf die Steuerkammer (44) zu. Dabei gelangt das Auslaßventil (54, 55) des Bremsdruckregelventils (II) in seine Offenstellung. Über das geöffnete Auslaßventil (54, 55), den als Stellglied (59) dienenden hohlen Stößel, eine Öffnung in der Wand des Stößels, den Entlüftunsraum (60) sowie die Druckmittelleitung (Durchgangsöffnung) (11) im rohrförmigen Fortsatz (14) der Gehäusewand (1) des Gehäuses (1, 27) und den Druckmittelauslaß (10) des Relaisventils (II) wird der Druck in der Druckmittelausgangskammer (56) des Bremsdruckregelventils (II) und somit auch der Druck in der Steuerkammer (21) des Relaisventils (I), welche über die Druckmittelleitung (20) mit der Druckmittelausgangskammer (56) des Bremsdruckregelventils (II) verbunden ist, zur Atmosphäre hin abgebaut.

Da dann der Druck in der Druckmittelausgangskammer (3) des Relaisventils (I) höher ist als der Druck in der Steuerkammer (21), bewegt der Relaiskolben (19) sich in Richtung auf die Steuerkammer (21) zu. Das Auslaßventil (9, 12) des Relaisventils (I) gelangt dabei in seine Offenstellung. Der Druck in der Druckmittelausgangskammer (3) und über diese der Druck in den Bremszylindern wird dann durch das geöffnete Auslaßventil (9, 12) und den Druckmittelauslaß (10) zur Atmosphäre hin abgebaut.

Bedingt durch den Druckabbau in der Druckmitteleingangskammer (33) gelangt auch das Einlaßventil (43, 40) des Vorsteuerventils in die Offenstellung, so daß dann auch die Steuerkammer (44) des Bremsdruckregelventils (II) über das geöffnete Einlaßventil (43, 40), die Druckmittelleitung (35), den Steuereingang (34) und das Motorwagen-Bremsventil mit der Atmosphäre verbunden ist.

Wird das Fahrzeug vollständig beladen, verringert sich der Abstand zwischen Fahrzeugaufbau und Fahrzeugachse. Die Bremskraftregeleinrichtung stellt sich dann auf "Vollast" ein. Dies geschieht in der Weise, daß bei Verringerung des Abstandes zwischen Fahrzeugachse und Fahrzeugaufbau das als rotationssymmetrischer Körper ausgebildete Stellelement (81) von der Drehfeder (66) um seine Längsachse verdreht wird - in diesem Ausführungsbeispsiel im Uhrzeigersinn -. Da der mit dem Betätigungselement (67) verbundene Stift (73) sich an der Schrägen der Kurvenbahn (79 bzw. 85) abstützt, und lediglich in dem im Stellelement (81) angeordneten Schlitz (71 bzw. 89) in Richtung der Längsachse des Stellelementes (81) eine Bewegung ausführen kann, wird er von der Kontur der Kurvenbahn (79 bzw. 85) in Richtung der Längsachse des Stellelementes (81) auf das Stellglied (59) zu verschoben, wobei er das Betätigungselement (67) in der gleichen Richtung mitnimmt.

Das Betätigungselement (67) der Antriebseinrichtung (III), welches mit dem Stellglied (59) des Bremsdruckregelventils (II) in Wirkverbindung steht bzw. in Wirkverbindung bringbar ist, verschiebt dabei das Stellglied (59) in Richtung auf das kombinierte Einlaß- und Auslaßventil (53, 54, 55) des Bremsdruckregelventils (II) zu. Die daraus resultierende Verringerung des Abstandes zwischen der dem kombinierten Ein- und Auslaßventil (53, 54, 55) zugewandten Seite des Stellgliedes (59) und dem kombinierten Einlaß- und Auslaßventil (53, 54, 55) wirkt sich dahingehend aus, daß der den Einlaßsitz (53) und das Ventilschließglied (54) tragende Bremsdruckregelkolben (24, 28) bei einem Bremsvorgang einen kürzeren Weg zurücklegt, bis das Auslaßventil (55, 54) in seine Schließstellung und das Einlaßventil (53, 54) in seine Offenstellung gelangt und somit nur ein Teilbereich der Membran (24) an den Rippen (26) des Kolbens (28) zur Anlage kommt. Die dadurch bewirkte Reduzierung der Wirkfläche (23) des Bremsdruckregelkolbens (24, 28) erfordert einen höheren Druck in der Druckmittelausgangskammer (56) des Bremsdruckregelventils (II), um den Bremsdruckregelkolben (24, 28) gegen die Kraft des Steuerdruckes in der Steuerkammer (44) und in der Druckmitteleingangskammer (33) wieder in eine Position zu bringen, in welcher das Einlaßventil (53, 54) geschlossen und somit eine Abschlußstellung des Bremsdruckregelventils (II) erreicht ist. Der vom Bremsdruckregelventil (II) in die Steuerkammer (21) des Relaisventils (I) eingesteuerte höhere Druck bewirkt dann auch einen vom Relaisventil (I) ausgesteuerten höheren Druck.

Wird das Fahrzeug entladen, vergrößert sich der Abstand zwischen Fahrzeugachse und Fahrzeugaufbau. Der Hebel (82) der Bremskraftregeleinrichtung wird dann mittels des Seils entgegen dem Uhrzeigersinn um die Drehachse der Antriebseinrichtung (III) verschwenkt. Bei der dadurch bewirkten Drehbewegung des Stellelementes (81) gegen die Kraft der Drehfeder (66) wird der Stift (73) und somit das Betätigungselement (67) mittels der Kurvenbahn (79 bzw. 85) in Richtung vom Stellglied (59) des Bremsdruckregelventils (II) weg verschoben. Dabei vergrößert sich der Abstand zwischen dem kombinierten Einlaß- und Auslaßventil (53, 54, 55) des Bremsdruckregelventils (II) und der diesem zugewandten Stirnseite des Stellgliedes (59).

Ist das freie Ende des Hebels (82) nicht mittels eines Seiles mit der Achse des Fahrzeugs verbunden, sondern direkt an diese angelenkt, kann auf die Drehfeder (66) verzichtet werden, es sei denn, daß die Drehfeder (66) die Aufgabe hat, bei Gestängebruch, das Stellelement (81) in eine definierte Position zu bringen.

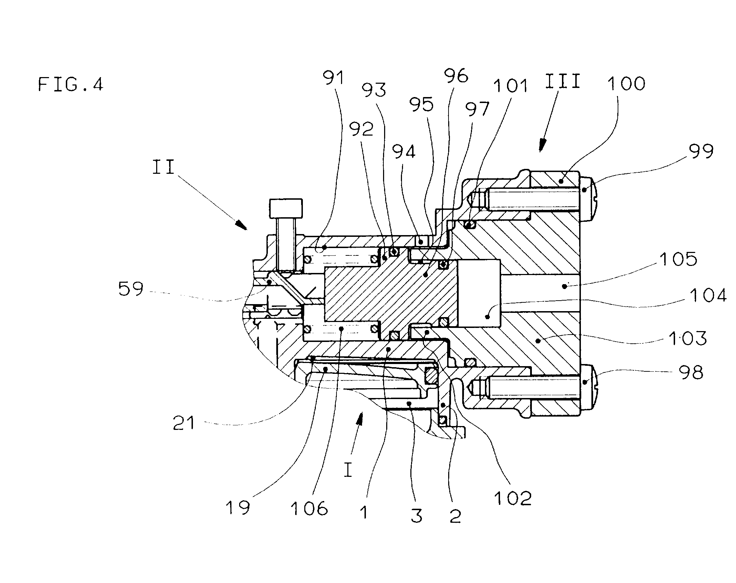

In Figur 4 ist ein Ausschnitt einer Bremskraftregeleinrichtung dargestellt, die eine pneumatisch betätigte Antriebseinrichtung (III) für das Stellglied des Bremsdruckregelventils (II) der Bremskraftregeleinrichtung aufweist. Da diese Bremskraftregeleinrichtung sich nur durch die andersartig ausgebildete Antriebseinrichtung (III) von der Bremskraftregeleinrichtung gemäß Figur 1 unterscheidet, wird nachfolgend auch nur die Antriebseinrichtung (III) beschrieben. Der besseren Übersicht halber sind die den in Figur 1 gezeigten Bauteilen gleichen Bauteile mit gleichen Bezugsziffern versehen.

Das erste Gehäuseteil (1) des Gehäuses (1, 27) des Bremsdruckregelventils (II) der Bremskraftregeleinrichtung weist eine in Richtung der Längsachse des Gehäuses (1, 27) verlaufende Öffnung (91) auf, die auf der dem Einlaßventil (53, 54) und dem Auslaßventil (55, 54) gegenüberliegenden Seite des Gehäuses (1, 27) angeordnet ist. Die Öffnung (91) wird von einem mit einem Flansch (100) versehenen Deckel (103) verschlossen. Der Deckel (103) ist mittels Befestigungsmitteln, wie z.B. Schrauben (98, 99), am Gehäuse (1, 27) befestigt. Zwischen dem Deckel (103) und dem Gehäuse (1, 27) ist ein Dichtring (101) angeordnet.

In der Öffnung (91) ist ein zum Deckel (103) hin abgestufter Kolben (92, 96) in Richtung der Längsachse des Gehäuses (1, 27) bewegbar angeordnet. Der Deckel (103) besitzt einen sich in die Öffnung (91) hineinerstrekkenden, koaxial zum Kolben (92, 96) angeordneten rohrförmiger Fortsatz (102). Der rohrförmige Fortsatz (102) ist in seiner axialen Erstreckung so bemessen, daß der den geringeren Durchmesser aufweisende Bereich (96) des Kolbens (92, 96) über den gesamten Hub des Kolbens (92, 96) in den rohrförmigen Fortsatz (102) eingetaucht ist. Der den geringeren Durchmesser aufweisende Bereich (96) des Kolbens (92, 96) und der Innendurchmesser des rohrförmigen Fortsatzes (102) sind so bemessen, daß der Kolben (92, 96) mit seinem den geringeren Durchmesser aufweisenden Bereich (96) im rohrförmigen Fortsatz (102) gleitend geführt wird. Auf dem Umfang des den größeren Durchmesser aufweisenden Bereiches (92) des Kolbens (92, 96) ist ein erster Dichtring (93) angeordnet, der dichtend an der die Öffnung (91) begrenzenden Wand anliegt. Ein zweiter Dichtring (97) ist auf dem Umfang des den geringeren Durchmesser aufweisenden Bereiches (96) des Kolbens (92, 96) angeordnet und liegt an der Wand des rohrförmigen Fortsatzes (102) dichtend an. Von der dem rohrförmigen Fortsatz (102) zugewandten Ringfläche des den größeren Durchmesser aufweisenden Bereiches (92) des Kolbens (92, 96) und der dieser Ringfläche zugewandten Seite des rohrförmigen Fortsatzes (102) wird eine erste Druckmittelkammer (95) begrenzt. Die erste Druckmittelkammer (95) ist über einen ersten Druckmittelanschluß (94) und eine nicht dargestellte Druckmittelleitung mit einer ersten Druckmittelquelle, z.B. einem Luftfederbalg einer Fahrzeugachse, verbunden. Eine von dem den geringeren Durchmesser aufweisenden Bereich (96) des Kolbens (92, 96) und dem Deckel (103) begrenzte zweite Druckmittelkammer (104) steht über einen zweiten Druckmittelanschluß (105) und eine nicht dargestellte Druckmittelleitung mit einer zweiten Druckmittelquelle, z. B. einem weiteren Luftfederbalg derselben Fahrzeugachse, in Verbindung.

Eine Feder (106) stützt sich mit ihrem einen Ende an einer Wand des Gehäuses (1, 27) ab und beaufschlagt mit ihrem anderen Ende den Kolben (92, 96) in Richtung auf die erste Druckmittelkammer. (95) und die zweite Druckmittelkammer (104) zu.

Die Antriebseinrichtung (III) für das Stellglied (59) des Bremsdruckregelventils (II) der Bremskraftregeleinrichtung besteht im wesentlichen aus dem Kolben (92, 96), und der Feder (106).

Die Antriebseinrichtung (III) arbeitet in der Weise, daß der Kolben (92, 96) vom Druck in der ersten Druckmittelkammer (95) und dem Druck in der zweiten Druckmittelkammer (104) gegen die Kraft der Feder (106) in einer von der Höhe des Druckes in den Luftfederbälgen abhängigen Positionen gehalten wird und daß der Kolben (92, 96) seine Position verändert, wenn der Druck in den Luftfederbälgen bei höherer Fahrzeugbeladung ansteigt oder bei niedrigerer Fahrzeugbeladung absinkt. Da das Stellglied (59) mit seiner dem Kolben (92, 96) zugewandten Seite am Kolben (92, 96) oder einem mit dem Kolben (92, 96) verbundenen Teil anliegt bzw. der Kolben (92, 96) am Stellglied (59) zur Anlage bringbar ist, wird es bei einer Erhöhung der Fahrzeugbeladung vom Kolben (92, 96) in Richtung auf das kombinierte Einlaß- und Auslaßventil (53, 54, 55) zu verschoben, wodurch sich der Abstand zwischen dem kombinierten Einlaß- und Auslaßventil (53, 54, 55) und der diesem zugewandten Seite des Stellgliedes (59) verringert. Vom Bremsdruckregelventil (II) wird dann ein höherer Druck ausgesteuert und der Steuerkammer (21) des Relaisventils (I) der Bremskraftregeleinrichtung zugeführt.

Wird die Fahrzeugbeladung verringert, bewegt der Kolben (92, 96) sich durch Einwirkung der Feder (106) in Richtung vom kombinierten Einlaß- und Auslaßventil (53, 54, 55) weg. Das Stellglied (59) folgt dem Kolben (92, 96), wodurch der Abstand zwischen dem kombinierten Einlaß- und Auslaßventil (53, 54, 55) und der diesem zugewandten Seite des Stellgliedes (59) sich vergrößert. Vom Bremsdruckregelventil (II) wird dann ein niedrigerer Druck ausgesteuert.

Das Stellglied (59) des Bremsdruckregelventils (II) weist auf seiner der Druckmittelausgangskammer (56) zugewandten Seite eine vom Druck der Druckmittelausgangskammer (56) beaufschlagbare Schulter auf. Dadurch ist sichergestellt, daß das Stellglied (59) bei einer Bewegung des Kolbens (92, 96) -beim Bremsdruckregelventil (II) gemäß Fig. 1 des Betätigungselementes (67) bzw. des Stellelementes (81) -in Richtung vom Einlaßventil (53, 54) und Auslaßventil (55, 54) weg dem Kolben (92, 96) -beim Bremsdruckregelventil (II) gemäß Fig. 1 dem Betätigungselement (67) bzw. dem Stellelement (81)- folgt. Zusätzlich kann die das Ventilschließglied (54) beaufschlagende Feder (30) so ausgelegt sein, daß bei einer Bewegung des Bremsdruckregelkolbens (24, 28) in Richtung auf das Stellglied (59) zu das Stellglied (59) vom Ventilschließglied (54) in Richtung auf den Kolben (92, 96) -beim Bremsdruckregelventil (II) gemäß Fig. 1 in Richtung auf das Betätigungselement (67)- zu verschoben wird, und zwar so weit, bis es an diesem zur Anlage kommt.

Es ist natürlich auch möglich, das Stellglied (59) mittels Verbindungsmitteln mit dem Kolblen (92, 96) zu verbinden oder das Stellglied (59) und den Kolben (92, 96) als eine einstückige Baueinheit auszubilden. In gleicher Weise kann auch beim Ausführungsbeispiel gemäß Figur 1 das Stellglied (59) mit dem Betätigungselement (67) mittels Verbindungsmitteln verbunden oder mit dem Betätigungselement (67) einstückig ausgebildet werden.

Das Bremsdruckregelventil (II) kann, wie in diesem Ausführungsbeispiel gezeigt ist, zwei vom Kolben (92, 96) begrenzte Druckmittelkammern (95 und 104) besitzen, wobei jede der beiden Druckmittelkammern (95 bzw. 104) mit je einem Luftfederbalg einer Fahrzeugachse verbunden ist. Es ist jedoch auch möglich, nur eine vom Kolben (92, 96) begrenzte Druckmittelkammer vorzusehen, an welche dann ein Luftfederbalg oder beide Luftfederbälge angeschlossen sein können.

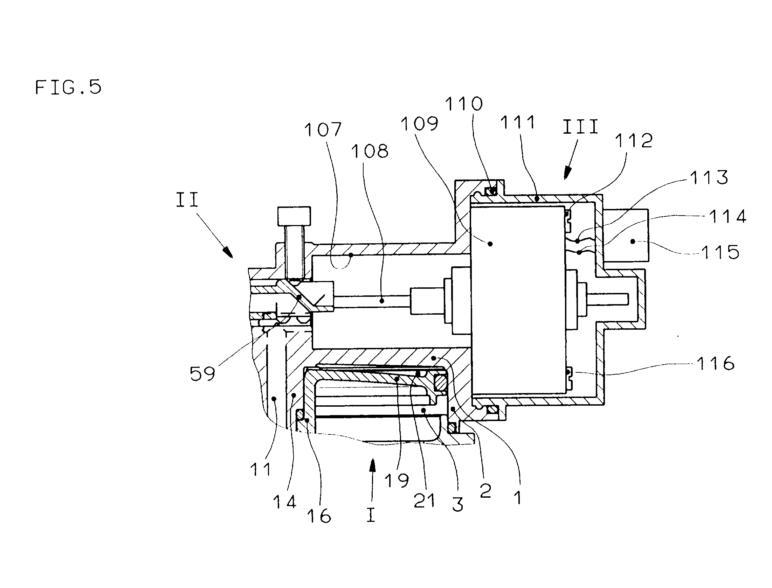

Gemäß Figur 5 dient als Antriebseinrichtung (III) für das Stellglied des Bremsdruckregelventils (II) der Bremskraftregeleinrichtung ein elektrischer Stellmotor. Da diese Bremskraftregeleinrichtung sich nur durch die andersartig ausgebildete Antriebseinrichtung von der Bremskraftregeleinrichtung gemäß Fig. 1 unterscheidet, wird nachfolgend auch nur die Antriebseinrichtung (III) und die Anordnung der Antriebseinrichtung (III) am Bremsdruckregelventil (II) beschrieben. Der besseren Übersicht halber sind die den in Fig. 1 gezeigten Bauteilen gleichen Bauteile mit gleichen Bezugsziffern versehen.

Das erste Gehäuseteil (1) des Gehäuses (1, 27) des Bremsdruckregelventils (II) der Bremskraftregeleinrichtung weist eine abgestufte Öffnung (107) auf, die von einem topfförmigen Deckel (111) verschlossen wird. Der Deckel (111) ist mittels Befestigungsmitteln, wie z. B. Schrauben, am Gehäuse (1, 27) befestigt. Zwischen dem Deckel (111) und dem Gehäuse (1, 27) ist ein Dichtring (110) angeordnet.

In dem den größeren Durchmesser aufweisenden Bereich der Gehäuseausnehmung (107) ist ein elektrischer Stellmotor (109) angeordnet, der als Antriebseinrichtung (III) für das Stellglied (59) dient. Der Stellmotor (109) ist mittels Schrauben (112 und 116) an der Stufe der die abgestufte Öffnung (107) begrenzenden Wand befestigt. Der Stellmotor (109) besitzt eine Spindel (108), die sich in Richtung auf das Stellglied (59) des Bremsdruckregelventils (II) zu erstreckt. Die Spindel (108) ist in ihrer axialen Erstreckung so bemessen, daß das Stellglied (59) mit seiner der Spindel (108) zugewandten Seite an der Spindel (108) anliegt.

Am Deckel (111) ist eine elektrische Anschlußeinrichtung (115) befestigt, die über durch den Deckel (111) hindurchgeführte elektrische Leitungen (113 und 114) mit dem Stellmotor (109) elektrisch verbunden ist. Über nicht dargestellte weitere elektrische Leitungen ist die elektrische Anschlußeinrichtung (115) mit einer ebenfalls nicht dargestellten Einrichtung zum Erkennen des Fahrzeugbeladungszustandes und zum Erzeugen von dem Fahrzeugbeladungszustand entsprechenden elektrischen Signalen verbunden.

Diese Antriebseinrichtung (III) arbeitet in der Weise, daß bei einer Änderung des Beladungszustandes des Fahrzeugs von der elektrischen Einrichtung zum Erkennen des Beladungszustandes ein vom Beladungszustand abhängiges elektrisches Steuersignal auf den Stellmotor (109) gegeben wird. Wird die Beladung des Fahrzeugs erhöht, bewegt die Spindel (108) sich in Richtung auf das kombinierte Einlaß- und Auslaßventil (53, 54, 55) des Bremsdruckregelventils (II) zu und verschiebt das Stellglied (59) in der gleichen Richtung. Der Abstand zwischen dem kombinierten Einlaß- und Auslaßventil (53, 54, 55) und der diesem zugewandten Seite des Stellgliedes (59) verringert sich dabei. Wird die Beladung des Fahrzeugs verringert, bewegt die Spindel (108) sich in Richtung vom kombinierten Einlaß- und Auslaßventil (53, 54, 55) weg. Das Stellglied (59) folgt der Spindel (108), durch Druckbeaufschlagung, wie bereits beschrieben, wodurch sich der Abstand zwischen dem kombinierten Einlaß- und Auslaßventil (53, 54, 55) und der diesem zugewandten Seite des Stellgliedes (59) wieder vergrößert.

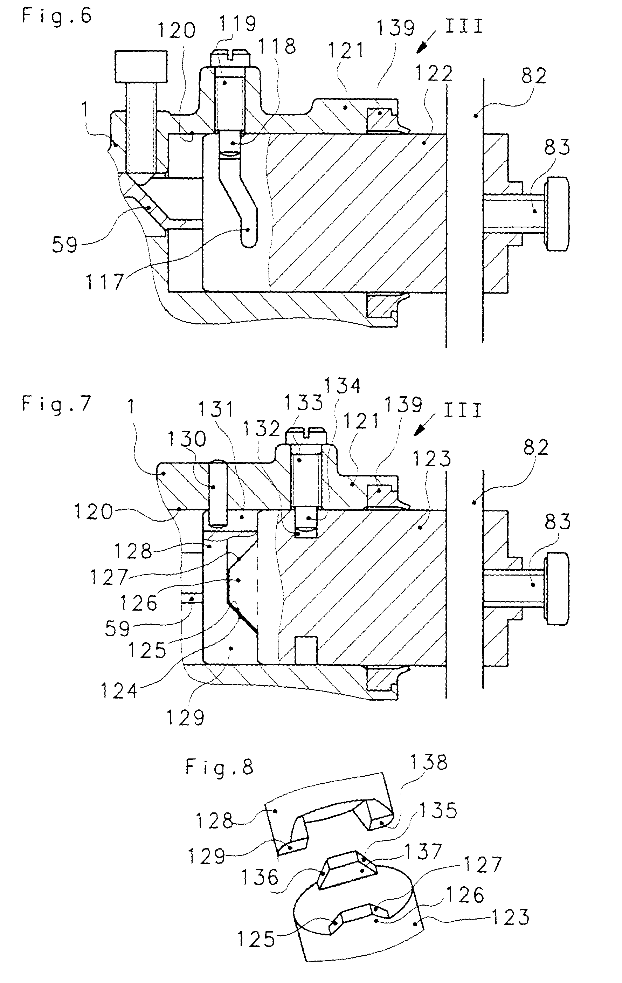

In Fig. 6 ist ein Ausschnitt einer Bremskraftregeleinrichtung dargestellt, die eine mechanisch betätigte Antriebseinrichtung (III) für das Stellglied des Bremsdruckregelventils (II) der Bremskraftregeleinrichtung aufweist. Da diese Bremskraftregeleinrichtung sich nur durch die andersartig ausgebildete Antriebseinrichtung (III) von der Bremskraftregeleinrichtung gemäß Fig. 1 unterscheidet, wird nachfolgend auch nur die Antriebseinrichtung (III) beschrieben. Der besseren Übersicht halber sind die den in Fig. 1 gezeigten Bauteilen gleichen Bauteile mit gleichen Bezugsziffern versehen.

Das Gehäuse (1, 27) des Bremsdruckregelventils (II) der Bremskraftregeleinrichtung weist eine in Richtung der Längsachse des Gehäuses (1, 27) verlaufende Öffnung (120) auf, die auf der dem Einlaßventil (53, 54) und dem Auslaßventil (55, 54) gegenüberliegenden Seite des Gehäuses (1, 27) angeordnet ist. In der Öffnung (120) ist ein als rotationssymmetrischer Körper ausgebildetes Stellelement (122) um seine Längsachse drehbar und in Richtung seiner Längsachse auf das Einlaß- und Auslaßventil (53, 54, 55) zu bzw. von diesem weg bewegbar angeordnet. Das die Öffnung (120) aufweisende Ende des Gehäuses (1, 27) dient somit als Lagerbock (121) für das Stellelement (122). Das Stellelement (122) besitzt auf seinem Umfang eine Kurvenbahn (117), die als ein in die Mantelfläche des Stellelementes (122) eingearbeiteter quer zur Längsachse des Stellelementes (122) verlaufender Schlitz ausgebildet ist, welcher wenigstens einen schräg zur Längsachse des Stellelementes (122) verlaufenden Bereich aufweist. Im Lagerbock (121) ist ein zapfenartiges Bauteil (119) um seine Längsachse drehbar angeordnet. Das zapfenartige Bauteil (119) besitzt an seiner dem Stellelement (122) zugewandten Stirnseite ein stiftartiges Bauteil (118), welches exzentrisch am zapfenartigen Bauteil (119) angeordnet ist und sich in die Kurvenbahn (117) hinein erstreckt. Durch Verdrehen des zapfenartigen Bauteiles (119) um seine Längsachse kann das Stellelement (122), je nach Drehrichtung des zapfenartigen Bauteiles (119, in Richtung auf das Stellglied (59) zu bzw. von diesem weg verstellt werden. Es ist natürlich auch möglich, anstelle des zapfenartigen Bauteiles (119) lediglich ein stiftartiges Bauteil direkt am Lagerbock (121) oder auch am Gehäuse (1, 27) anzuordnen, welches in die Kurvenbahn (117) des Stellelementes (122) eingreift. Ein Verstellen des Stellelementes (122) in Richtung der Längsachse des Lagerbockes ist dann jedoch nicht möglich. An dem freien Ende des Lagerbockes (121) ist ein Dichtring (139) angeordnet, der sowohl am Lagerbock (121) als auch an dem Stellelement (122) dichtend anliegt. An dem aus dem Gehäuse (1, 27) herausragenden freien Ende des Stellelementes (122) ist der Hebel (82) befestigt, über welchen das Stellelement (122) mit einem Teil des Fahrzeugs verbunden ist.

Es ist auch möglich, die Kurvenbahn (117) am Gehäuse (1, 27) oder am Lagerbock (121) anzuordnen, wobei die Kurvenbahn (117) dann quer zur Längsachse des Gehäuses (1, 27) bzw. des Lagerbockes (121) verläuft. Das stiftartige Bauteil (118) ist dann auf dem Umfang des Stellelementes (122) angeordnet und erstreckt sich dann mit seinem freien Ende in die am Gehäuse (1, 27) oder am Lagerbock (121) angeordnete Kurvenbahn (117) hinein.

Das mit der Kurvenbahn (117) versehene Stellelement (122) und das am Lagerbock (121) oder am Gehäuse (1, 27) direkt oder indirekt angeordnete stiftartige Bauteil (118) wirken in der Weise zusammen, daß bei einer Drehbewegung des Stellelementes (122) um seine Längsachse je nach Drehrichtung, das Stellelement (122) sich in Richtung auf das Einlaßventil (53, 54) und das Auslaßventil (55, 54) des Bremsdruckregelventils (II) zu bzw. von diesem weg bewegt.

Wird das Fahrzeug voll beladen, so wird durch die Verringerung des Abstandes zwischen Fahrzeugaufbau und Fahrzeugachse der Hebel (82) z. B. im Uhrzeigersinn verschwenkt, wodurch das Stellelement (122) im Uhrzeigersinn um seine Längsachse gedreht wird. Dadurch, daß die Kontur der Kurvenbahn (117) am stiftartigen Bauteil (118) entlang geführt wird und sich dabei an dem stiftartigen Bauteil (118) abstützt, wird das Stellelement (122) in Richtung auf das Einlaßventil (53, 54) und das Auslaßventil (55, 54) zu gezogen, wenn das stiftartige Bauteil (118) in den schräg zur Längsachse des Stellelementes (122) verlaufenden Bereich der Kurvenbahn (117) gelangt. Da das Stellglied (59) des Bremsdruckregelventils (II) zwischen dem Einlaß- und Auslaßventil (53, 55, 54) und dem Stellelement (122) angeordnet ist, wird das Stellglied (59) vom Stellelement (122) in Richtung auf das Einlaßventil (53, 54) und das Auslaßventil (55, 54) zu verschoben, wobei sich der Abstand zwischen dem Einlaß- und Auslaßventil (55, 53, 54) und der diesem zugewandten Stirnseite des Stellgliedes (59) verringert. Wird das Fahrzeug entladen, so daß sich der Abstand zwischen dem Fahrzeugaufbau und der Fahrzeugachse vergrößert, wird der Hebel (82) entgegen dem Uhrzeigersinn um die Längsachse des Stellelementes (122) verschwenkt. Dabei wird das Stellelement (122) vom Hebel (82) um seine Längsachse entgegen dem Uhrzeigersinn gedreht. Bedingt durch die Zwangsführung des Stellelementes (120) mittels der Kurvenbahn (117) und dem stiftartigen Bauteil (118) bewegt das Stellelement (122) sich in Richtung vom Einlaß- und Auslaßventil (55, 53, 54) weg. Das Stellglied (59) folgt dem Stellelement (122), sobald wieder Druckmittel in die Druckmittelausgangskammer des Bremsdruckregelventils (II) gelangt, wie im vorstehenden bereits beschrieben ist.

Es ist auch möglich, das Stellelement (122) im Bereich des stiftartigen Bauteiles (118) nach Art einer Schnecke auszubilden, in deren Gewindegänge das stiftartige Bauteil (118) eingreift. Die Schnecke bildet dann die Kurvenbahn (117).

Fig. 7 zeigt einen Ausschnitt einer Bremskraftregeleinrichtung, die eine vereinfachte mechanisch betätigte Antriebseinrichtung (III) für das Stellglied des Bremsdruckregelventils (II) der Bremskraftregeleinrichtung aufweist. Da diese Bremskraftregeleinrichtung sich nur durch die andersartig ausgebildete Antriebseinrichtung (III) von der Bremskraftregeleinrichtung gemäß Fig. 1 unterscheidet, wird nachfolgend auch nur die Antriebseinrichtung (III) beschrieben. Der besseren Übersicht halber sind die den in den Fig. 1 und 6 gezeigten Bauteilen gleichen Bauteile mit gleichen Bezugsziffern versehen.

Das Gehäuse (1, 27) des Bremsdruckregelventils (II) der Bremskraftregeleinrichtung weist eine in Richtung der Längsachse des Gehäuses (1, 27) verlaufende Öffnung (120) auf, die auf der dem Einlaßventil (53, 54) und dem Auslaßventil (55, 54) gegenüberliegenden Seite des Gehäuses (1, 27) angeordnet ist. Der die Öffnung (120) aufweisende Bereich des Gehäuses (1, 27) dient als Lagerbock (121) für ein Stellelement (123). Das Stellelement (123) ist als ein rotationssymmetrischer Körper ausgebildet, der um seine Längsachse drehbar in der Öffnung (120) angeordnet ist. Das Stellelement (123) besitzt auf seinem Umfang eine umlaufende nutartige Vertiefung (132), in welche ein stiftartiges Bauteil (134) eingreift. Das stiftartige Bauteil (134) ist exzentrisch an der dem Stellelement (123) zugewandten Stirnseite eines zapfenartigen Bauteiles (133) angeordnet, welches um seine Längsachse verdrehbar im Lagerbock (121) oder im Gehäuse (1, 27) angeordnet ist. Das Stellelement (123) besitzt auf seiner dem Stellglied (59) zugewandten Seite einander gegenüberliegend zwei sich in Richtung auf das Stellglied (59) zu erstrekkende Vorsprünge (126 und 137), wobei jeder dieser Vorsprünge (126 und 137) zwei abgeschrägte Flanken (125 und 127) bzw. abgeschrägte Flanken (135 und 136) aufweist, die am Stellelement (123) beginnen und in Richtung auf das freie Ende des Vorsprungs zu abfallen. Jeder dieser Vorsprünge (126 bzw. 137) dient als eine erste Steuerkurve (126, 125, 127) bzw. Steuerkurve (137, 135, 136) des Stellelementes (123). Zwischen dem Stellglied (59) und der die erste Steuerkurve (126, 125, 127) bzw. Steuerkurve (137, 135, 136) aufweisenden Seite des Stellelementes (123) ist in der Öffnung (120) ein als ein rotationssymmetrischer Körper ausgebildetes Gleitstück (128), welches als Betätigungselement für das Stellglied (59) dient, in Richtung der Längsachse der Öffnung (120) bewegbar angeordnet. Das Gleitstück (128) besitzt auf seiner der ersten Steuerkurve (126, 125, 127) bzw. Steuerkurve (137, 135, 136) zugewandten Seite einander gegenüberliegend zwei sich in Richtung auf das Stellelement (123) zu erstreckende als zweite Steuerkurve (129, 124) bzw. Steuerkurve (138) dienende Vorsprünge (129 und 138), wobei jeder dieser Vorsprünge zwei abgeschrägte Flanken (124) aufweist. Jede der abgeschrägten Flanken (124) der Vorsprünge (129 und 138) verläuft parallel zu der korrespondierenden abgeschrägten Flanke (125 bzw. 127 bzw. 136 bzw. 135) der Vorsprünge (126 bzw. 137) des Stellelementes (123). Das Gleitstück (128) weist in seiner äußeren Mantelfläche eine in Richtung der Längsachse des Gleitstückes (128) verlaufende nutartige Vertiefung (131) auf, in welche sich ein stiftartiges Bauteil (130) hinein erstreckt, welches am Lagerbock (121) oder am Gehäuse (1, 27) angeordnet ist. Das stiftartige Bauteil (130) und die nutartige Vertiefung (131) dienen als Verdrehsicherung (130, 131) für das Gleitstück (128), mittels welchem ein Verdrehen des Gleitstückes (128) um seine Längsachse verhindert wird.

Die Steigung der abgeschrägten Flanken (125, 127, 135, 136) der Vorsprünge (126, 137) des Stellelementes (123) und die Steigung der korrespondierenden abgeschrägten Flanken (124) der Vorsprünge (129, 138) sind so gewählt und das Gleitstück (128) ist so zum Stellelement angeordnet, daß bei einer Drehbewegung des Stellelementes (123) um seine Längsachse die abgeschrägten Flanken (125, 127, 135, 136) der Vorsprünge (126, 137) des Stellelementes (123) und die abgeschrägten Flanken (124) der Vorsprünge (129, 138) des Gleitstückes (128) aufeinander gleiten, wobei das Gleitstück (128) vom Stellelement (123) in Richtung auf das Einlaß- und Auslaßventil (53, 54, 55) zu verschoben wird.

Wird das Stellelement (123) entgegen dem Uhrzeigersinn um seine Längsachse gedreht, wird das Gleitstück (128) in Richtung auf das Einlaßventil (53, 54) und das Auslaßventil (55, 54) des Bremsdruckregelventils (II) zu verschoben, wobei es das Stellglied (59) in der gleichen Richtung verschiebt. Dabei verringert sich der Abstand zwischen dem Einlaß- und Auslaßventil (55, 53, 54) des Bremsdruckregelventils (II) und der diesem zugewandten Seite des Stellgliedes (59), welches, wie auch beim Ausführungsbeispiel gemäß Fig. 6, zwischen dem Einlaß- und Auslaßventil (55, 53, 54) des Bremsdruckregelventils (II) und dem Gleitstück (128) bzw. dem Stellelement (123) in Richtung der Längsachse des Gehäuses (1, 27) des Bremsdruckregelventils (II) bewegbar angeordnet ist.

Bei einer Drehbewegung des Stellelementes (123) im Uhrzeigersinn löst sich die erste Steuerkurve (126, 125, 127, 137, 135, 136) des Stellelementes (123) von der zweiten Steuerkurve (129, 124, 138) des Gleitstückes (128). Wird das Stellglied (59) bei Druckbeaufschlagung mit dem Druck der Druckmittelausgangskammer des Bremsdruckregelventils in Richtung auf das Stellelement (123) zu verschoben, nimmt es das Gleitstück (128) in der gleichen Richtung mit, wobei dann die Steuerkurve (126, 125, 127, 137, 135, 136) des Stellelementes (123) und die Steuerkurve (129, 124, 138) des Gleitstückes (128) wieder aneinander zur Anlage kommen.

In Fig. 8 sind der die erste Steuerkurve (126, 125, 127, 137, 135, 136) aufweisende Bereich des Stellelementes (123) und das Gleitstück (128) mit der zweiten Steuerkurve (129, 124, 138) perspektivisch dargestellt.

Wird auf eine Verstellbarkeit des Stellelementes (123) in axialer Richtung verzichtet, kann, wie auch beim Ausführungsbeispiel gemäß Fig. 6, das stiftartige Bauteil (134) direkt am Lagerbock (121) oder am Gehäuse (1, 27) angeordnet werden.

Beim Ausführungsbeispiel gemäß Fig. 7 kann das stiftartige Bauteil (130) der Verdrehsicherung (130, 131) für das als Betätigungselement dienende Gleitstück (128) exzentrisch an einem zapfenartigen Bauteil angeordnet sein, wobei dann dieses zapfenartige Bauteil am Lagerbock (121) oder am Gehäuse (1, 27) um seine Längsachse drehbar angeordnet ist. Mittels des stiftartigen Bauteiles (130) und eines mit diesem zusammenwirkenden am Gleitstück (128) angeordneten Anschlages ist dann das Gleitstück (128) in Richtung auf das Einlaß- und Auslaßventil (53, 54, 55) zu bzw. von diesem weg verstellbar. Das als axiale Sicherungsmittel für das Stellelement (123) dienende stiftartige Bauteil (134) wird dann nicht an einem zapfenartigen Bauteil sondern direkt am Lagerbock (121) bzw. am Gehäuse (1, 27) angeordnet, so daß das Stellelement (123) in Richtung seiner Längsachse fixiert ist.

Bei allen beschriebenen Antriebseinrichtungen (III), die eine oder mehrere Steuerkurven aufweisen, ist es von Bedeutung, daß die Steuerkurve bzw. die Steuerkurven wenigstens einen schräg zur Längsachse des Stellelementes (81, 122, 123) bzw. des Lagerbockes (90, 86, 121) bzw. des Gleitstückes (128) verlaufenden Bereich aufweisen, so daß bei einer Drehbewegung des Stellelementes (81, 122, 123) um seine Längsachse das Gleitstück (128) bzw. das Stellelement (122) oder gemäß Fig. 1 das Betätigungselement (67) in Richtung seiner Längsachse verschoben wird, und zwar in Richtung auf das Einlaßventil (53, 54) und das Auslaßventil (55, 54) des Bremsdruckregelventils (II) zu.

Von besonderer Bedeutung für die Erfindung ist es, daß das Bremsdruckregelventil (II) so zum Relaisventil (I) angeordnet ist, daß seine Längsachse-Bewegungsrichtung von Bremsdruckregelkolben (24, 28), Einlaß- und Auslaßventil (53, 54, 55) und Stellglied (59) - quer zur Längsachse des Relaisventils (I) - Bewegungsrichtung von Relaiskolben (19) und Einlaß- und Auslaßventil (7, 9, 12) - verläuft, unabhängig von der sonstigen Ausgestaltung dieser Ventileinrichtungen.

Durch die besondere Ausbildung der mechanischen Antriebseinrichtung (III) des Bremsdruckregelventils (II) und durch die besondere Anordnung der Bauteile des Bremsdruckregelventils (II) und der Antriebseinrichtung (III) zueinander - Stellelement (81, 122, 123) bzw. Betätigungselement (67), Stellglied (59), Einlaß- und Auslaßventil (53, 54, 55) und Bremsdruckregelkolben (24, 28) sind gleichachsig oder annähernd gleichachsig zueinander und hintereinanderliegend im Gehäuse (1, 27) des Bremsdruckregelventils (II) angeordnet - wird der Aufbau der Bremskraftregeleinrichtung, insbesondere bezüglich der geringen Abmessungen der Bremskraftregeleinrichtung, vereinfacht.

Das das Stellelement (81, 122, 123)und das Betätigungselement (67) bzw. das als Betätigungselement dienende Gleitstück (128) gleichachsig oder wenigstens annähernd gleichachsig zum Stellglied (59) angeordnet sind und das Stellelement (122) oder das mit dem Stellelement und dem Stellglied (59) zusammenwirkende Betätigungselement (67) bzw. Gleitstück (128) in Richtung der Längsachse des Stellgliedes (59) bewegt wird, wird erreicht, daß die Drehbewegung des Stellelementes (81, 122, 123) nicht direkt am Stellglied (59) in eine geradlinige Bewegung des Stellgliedes (59) umgesetzt wird, sondern im Bereich der Antriebseinrichtung (III), so daß auf das Stellglied (59) einwirkende Querkräfte weitestgehend vermieden werden.

Die beschriebene Bremskraftregeleinrichtung ist nach dem Baukastenprinzip aufgebaut, so daß auf einfache Art und Weise mindestens zwei Geräte -Relaisventil und lastabhängig steuerbares Bremsdruckregelventil- miteinander verbunden werden können und so ein Gerät mit mehr Funktionen -ALB-Relaisventil- ergeben.

## Patentansprüche

1. Lastabhängig steuerbare Bremskraftregeleinrichtung für eine druckmittelbetätigte Fahrzeugbremsanlage, mit folgenden Merkmalen:
a) es ist ein Bremsdruckregelventil (II) vorgesehen, welches ein Einlaßventil (53, 54) und ein Auslaßventil (55, 54) besitzt;
b) zur Betätigung des Einlaßventils (53, 54) und des Auslaßventils (55, 54) des Bremsdruckregelventils (II) dient ein Bremsdruckregelkolben (28, 24);
c) die Regelgröße des Bremsdruckregelventils (II) von Leerlast bis Vollast ist mittels eines lastabhängig verstellbaren Stellgliedes (59) einstellbar;
d) zum lastabhängigen Verstellen des Stellgliedes (59) dient eine Antriebseinrichtung (III);
e) es ist ein dem Bremsdruckregelventil (II) nachgeschaltetes Relaisventil (I) vorgesehen, welches ein Einlaßventil (7, 9) und ein Auslaßventil (12, 9) aufweist;
f) zur Betätigung des Einlaßventils (7, 9) und des Auslaßventils (12, 9) des Relaisventils (I) dient ein Relaiskolben (19);
g) das Bremsdruckregelventil (II) und das Relaisventil (I) sind zu einer Baueinheit zusammengefaßt;
h) der Bremsdruckregelkolben (28, 24), das Einlaßventil (53, 54) und das Auslaßventil (55, 54) des Bremsdruckregelventils (II) sowie das Stellglied (59) sind in Richtung der Längsachse des Bremsdruckregelventils (II) bewegbar angeordnet;
i) der Relaiskolben (19) sowie das Einlaßventil (7, 9) und das Auslaßventil (12, 9) des Relaisventils (I) sind in Richtung der Längsachse des Relaisventils (I) bewegbar angeordnet;
k) das Bremsdruckregelventil (II) und das Relaisventil (I) sind so zueinander angeordnet, daß die Längsachse des Bremsdruckregelventils (II) quer zur Längsachse des Relaisventils (I) verläuft;
l) das Bremsdruckregelventil (II) weist einen Entlüftungsraum (60) auf, welcher über das Auslaßventil (54, 55) des Bremsdruckregelventils (II) mit der Druckmittelausgangskammer 56) des Bremsdruckregelventils (II) verbindbar ist;
m) das Relaisventil (I) weist einen zur Druckmittelsenke hinführenden Druckmittelauslaß (10) auf;
n) der Druckmittelauslaß (10) des Relaisventils (I) ist über das Auslaßventil (7, 12) des Relaisventils (I) mit der Druckmittelausgangskammer (3) des Relaisventils (I) verbindbar;
gekennzeichnet durch die folgenden Merkmale:
o) es ist eine den Entlüftungsraum (60) des Bremsdruckregelventils (II) mit dem Druckmittelauslaß (10) des Relaisventils (I) verbindende, in der Bremskraftregeleinrichtung gelegene Druckmittelleitung (11) vorgesehen;
p) die Antriebseinrichtung (III) weist ein Stellelement (81, 96, 108, 122, 123) auf, welches zur Betätigung des Stellgliedes (59) direkt oder über ein Betätigungselement (67, 128) mit dem Stellglied (59) in Wirkverbindung steht oder in Wirkverbindung bringbar ist, wobei das Stellelement (81, 96, 108, 122, 123) und das Betätigungselement (67, 128) bzw. das Stellelement (81, 96, 108, 122, 123) wenigstens annähernd gleichachsig zum Stellglied (59) angeordnet sind und das Betätigungselement (67, 128) oder das Stellelement zum Verstellen des Stellgliedes (59) in Richtung der Längsachse des Stellgliedes (59) bewegbar ist, und wobei das Stellelement (81, 96, 108, 122, 123) durch Beaufschlagung mit Radaufhängungsdruck oder durch einen elektrischen Stellmotor (109) in Richtung der Längsachse des Stellgliedes (59) oder durch Drehen um seine Längsachse Lastabhängig betätigt wird.

2. Lastabhängig steuerbare Bremskraftregeleinrichtung nach Anspruch 1, dadurch gekennzeichnet, daß das Einlaß- und Auslaßventil (53, 54, 55), des Bremsdruckregelventils (II) der Bremsdruckregelkolben (28, 24), das Stellglied (59) des Bremsdruckregelventils (II) und die Antriebseinrichtung (III) gleichachsig zueinander angeordnet sind.

3. Lastabhängig steuerbare Bremskraftregeleinrichtung nach Anspruch 1, gekennzeichnet durch die folgenden Merkmale:
a) der Relaiskolben (19) sowie das Einlaßventil (7, 9) und das Auslaßventil (12, 9) des Relaisventils (I) sind in einem ersten Gehäuse (1, 2, 17) angeordnet;
b) der Bremsdruckregelkolben (28, 24), das Einlaßventil (53, 54) und das Auslaßventil (55, 54) sowie das Stellglied (59) des Bremsdruckregelventils (II) sind in einem zweiten Gehäuse (1, 27) angeordnet;
c) das Bremsdruckregelventil (II) besitzt eine Druckmitteleingangskammer (33), eine Druckmittelausgangskammer (56) und eine Steuerkammer (44), wobei die Druckmittelausgangskammer (56) wahlweise mit der Druckmitteleingangskammer (33) oder mit einer Druckmittelsenke verbindbar oder gegen beide absperrbar ist;
d) das Relaisventil (I) besitzt eine Druckmitteleingangskammer (13), eine Druckmittelausgangskammer (3) und eine Steuerkammer (21), wobei die Druckmittelausgangskammer (3) wahlweise mit der Druckmitteleingangskammer (13) oder mit einer Druckmittelsenke verbindbar oder gegen beide absperrbar ist;
e) die Druckmittelausgangskammer (56) des Bremsdruckregelventils (II) ist über eine Druckmittelleitung (20) mit der Steuerkammer (21) des Relaisventils (I) verbunden.

4. Lastabhängig steuerbare Bremskraftregeleinrichtung nach Anspruch 3, gekennzeichnet durch die folgenden Merkmale:
a) das Gehäuse (1, 2, 17) des Relaisventils (I) und das Gehäuse (1, 27) des Bremsdruckregelventils (II) besitzen eine gemeinsame Gehäusewand (1), welche die Steuerkammer (21) des Relaisventils (I) von der Druckmittelausgangskammer (56) des Bremsdruckregelventils (II) trennt;
b) als Druckmittelleitung (20) zur Verbindung der Steuerkammer (21) des Relaisventils (I) mit der Druckmittelausgangskammer (56) des Bremsdruckregelventils (II) dient ein die Gehäusewand (1) durchdringender Kanal.

5. Lastabhängig steuerbare Bremskraftregeleinrichtung nach wenigstens einem der vorhergehenden Ansprüche, gekennzeichnet durch die folgenden Merkmale:
a) die Antriebseinrichtung (III) für das lastabhängig verstellbare Stellglied (59) besitzt einen Lagerbock (90, 86), welcher an der dem Einlaßventil (53, 54) und dem Auslaßventil (55, 54) des Bremsdruckregelventils (II) gegenüberliegenden Seite des Gehäuses (1, 27) des Bremsdruckregelventils (II) angeordnet ist;
b) der Lagerbock (90, 86) besitzt eine in Richtung der Längsachse von Stellglied (59) sowie Einlaßventil (53, 54) und Auslaßventil (55, 54) des Bremsdruckregelventils (II) verlaufende Öffnung (140), in welcher das Stellelement (81) um seine Längsachse drehbar angeordnet ist;
c) das Stellelement (81) weist eine in Richtung seiner Längsachse verlaufende Ausnehmung (72) auf, in welcher ein stößelartiges Betätigungselement (67) für das Stellglied (59) in Richtung der Längsachse des Stellelementes (81) bewegbar angeordnet ist;
d) das Stellglied (59) ist zwischen dem Einlaß- und Auslaßventil (53, 54, 55) des Bremsdruckregelventils (II) und dem Betätigungselement (67) angeordnet;
e) am Betätigungselement (67) ist quer zur Längsachse des Betätigungselementes (67) verlaufend ein sich vom Betätigungselement (67) weg erstreckender Stift (73) angeordnet, der sich durch eine im Stellelement (81) angeordnete Führung (71, 89), welche in Richtung der Längsachse des Stellelements (81) verläuft, hindurch in eine im Lagerbock (90, 86) angeordnete Kurvenbahn (79, 85) hineinerstreckt, wobei das Stellelement (81), das 3etätigungselement (67) mit Stift (73) und die Kurvenbahn (79, 85) in der Weise zusammenwirken, daß bei einer Drehbewegung des Stellelements (81) um seine Längsachse, je nach Drehrichtung, daß stößelartige Betätigungselement (67) in Richtung auf das Einlaßventil (53, 54) und das Auslaßventil (55, 54) des Bremsdruckregelventils (II) zu bzw. von diesem weg verschoben wird;
f) das Betätigungselement (67) und das Stellglied (59) sind so zueinander angeordnet, daß das Stellglied (59) bei einer Bewegung des Betätigungselementes (67) in Richtung auf das Einlaßventil (53, 54) und das Auslaßventil (55, 54) des Bremsdruckregelventils (II) zu vom Betätigungselement (67) in Richtung auf das Einlaßventil (53, 54) und das Auslaßventil (55, 54) zu verschiebbar ist.

6. Lastabhängig steuerbare Bremskraftregeleinrichtung, nach Anspruch 5, gekennzeichnet durch die folgenden Merkmale:
a) die Führung (71, 39) für den am stößelartigen Betätigungselement (67) angeordneten Stift (73) wird von einem im Stellelement (81) angeordneten Schlitz gebildet;
b) die im Lagerbock (90, 86) angeordnete Kurvenbahn (79, 85) wird von einem im wesentlichen quer zur Längsachse des Lagerbockes (90, 86) verlaufenden Schlitz im Lagerbock (90, 86) gebildet.

7. Lastabhängig steuerbare Bremskraftregeleinrichtung nach wenigstens einem der vorhergehenden Ansprüche 1 bis 4, gekennzeichnet durch die folgenden Merkmale:
a) die Antriebseinrichtung (III) für das lastabhängig verstellbare Stellglied (59) besitzt einen Lagerbock, welcher an der dem Einlaßventil (53, 54) und dem Auslaßventil (55, 54) des Bremsdruckregelventils (II) gegenüberliegenden Seite des Gehäuses (1, 27) des Bremsdruckregelventils (II) angeordnet ist;
b) der Lagerbock (90, 86) besitzt eine in Richtung der Längsachse von Stellglied (59) sowie Einlaßventil (53, 54) und Auslaßventil (55, 54) des Bremsdruckregelventils (II) verlaufende Öffnung (140), in welcher das Stellelement (81) um seine Längsachse drehbar angeordnet ist;
c) das Stellelement (81) weist eine in Richtung seiner Längsachse verlaufende Ausnehmung (72) auf in welcher ein stößelartiges Betätigungselement (67) für das Stellglied (59) in Richtung der Längsachse des Stellelementes (81) bewegbar angeordnet ist;
d) das Stellglied (59) isc zwischen dem Einlaß- und Auslaßventil (53, 54, 55) und dem Betätigungselement (57) angeordnet;
e) am Betätigungselement (67) ist ein quer zur Längsachse des Betätigungselementes (67) verlaufender und sich von diesem weg erstreckender Stift (73) angeordnet, der sich durch eine im Stellelement (81) angeordnete Kurvenbahn, welche quer zur Längsachse des Stellelementes (81) verlaufend am Stellelement (81) angeordnet ist, hindurch in eine im Lagerbock (90, 86) angeordnete, in Richtung der Längsachse des Lagerbockes (90, 86) verlaufende Führung hineinerstreckt, wobei das Stellelement (81), das stößelartige Betätigungselement (67) mit Stift (73) und die Kurvenbahn in der Weise zusammenwirken, daß bei einer Drehbewegung des Stellelementes (81) um seine Längsachse, je nach Drehrichtung, das stößelartige Betätigungselement (67) für das Stellglied (59) in Richtung auf das Einlaßventil (53, 54) und das Auslaßventil (55, 54) des Bremsdruckregelventils (II) zu bzw. von diesem weg verschoben wird;
f) das Betätigungselement (67) und das Stellglied (59) sind so zueinander angeordnet, daß das Stellglied (59) bei einer 3ewegung des Betätigungselementes (67) in Richtung auf das Einlaßventil (53, 54) und das Auslaßventil (55, 54) zu vom Betätigungselement (67) in Richtung auf das Einlaßventil (53, 54) und das Auslaßventil (55, 54) zu verschiebbar ist.

8. Lastabhängig steuerbare Bremskraftregeleinrichtung nach Anspruch 7, gekennzeichnet durch die folgenden Merkmale:
a) die Führung für den am stößelartigen Betätigungselement (67) angeordneten Stift (73) wird von einem im Lagerbock (90, 86) angeordneten Schlitz gebildet;
b) die im Stellelement (81) angeordnete Kurvenbahn wird von einem im wesentlichen quer zur Längsachse des Stellelementes (81) verlaufenden Schlitz im Stellelement (81) gebildet.

9. Lastabhängig steuerbare Bremskraftregeleinrichtung nach wenigstens einem der vorhergehenden Ansprüche, dadurch gekennzeichnet, daß im oder am Gehäuse (1, 27) des Bremsdruckregelventils (II) ein Vorsteuerventil zum Beeinflussen des Druckaufbaus in der Steuerkammer (44) des Bremsdruckregelventils angeordnet ist.

10. Lastabhängig steuerbare Bremskraftregeleinrichtung nach wenigstens einem der vorhergehenden Ansprüche 1 bis 4, dadurch gekennzeichnet, daß die Antriebseinrichtung (III) von einem Kolben (92, 96) gebildet wird, der im Gehäuse (1, 27) des Bremsdruckregelventils (II) von einem Druckmittel beaufschlagt gegen die Kraft einer Feder (106) in Richtung auf das Einlaßventil (53, 54) und das Auslaßventil (55, 54) des Bremsdruckregelventils (II) zu bewegbar angeordnet ist, wobei der Kolben (92, 96) auf der dem Einlaßventil (53, 54) und dem Auslaßventil (55, 54) des Bremsdruckregelventils (II) abgewandten Seite des Stellgliedes (59) des Bremsdruckregelventils (II) angeordnet ist und mit dem Stellglied (59) derart in Wirkverbindung steht oder in Wirkverbindung bringbar ist, daß bei einer Bewegung des Kolbens (92, 96) in Richtung auf das Einlaßventil (53, 54) und das Auslaßventil (55, 54) des Bremsdruckregelventils (II) zu das Stellglied (59) vom Kolben (92, 96) in der gleichen Richtung verschiebbar ist.

11. Lastabhängig steuerbare Bremskraftregeleinrichtung nach wenigstens einem der vorhergehenden Ansprüche 1 bis 4, dadurch gekennzeichnet, daß die Antriebseinrichtung (III) für das Stellglied (59) des Bremsdruckregelventils (II) von einem elektrischen Stellmotor (109) gebildet wird, der im oder am Gehäuse (1, 27) des Bremsdruckregelventils (II) angeordnet ist und der eine Spindel (108) aufweist, die mit dem Stellglied (59) des Bremsdruckregelventils (II) derart in Wirkverbindung steht, daß das Stellglied (59) mittels der Spindel (108) in Richtung auf das Einlaßventil (53, 54) und das Auslaßventil (55, 54) des Bremsdruckregelventils (II) zu bzw. von diesem weg bewegbar ist.

12. Lastabhängig steuerbare Bremskraftregeleinrichtung nach wenigstens einem der vorhergehenden Ansprüche 1 bis 4, gekennzeichnet durch die folgenden Merkmale:
a) die Antriebseinrichtung (III) für das lastabhängig verstellbare Stellglied (59) besitzt einen Lagerbock (121), welcher an der dem Einlaßventil (53, 54) und dem Auslaßventil (55, 54) des Bremsdruckregelventils (II) gegenüberliegenden Seite des Gehäuses (1, 27) des Bremsdruckregelventils (II) angeordnet ist;
b) der Lagerbock (121) besitzt eine in Richtung der Längsachse von Stellglied (59) sowie Einlaßventil (53, 54) und Auslaßventil (55, 54) des Bremsdruckregelventils (II) verlaufende Öffnung (120), in welcher das Stellelement (122) um seine Längsachse drehbar und in Richtung der Längsachse des Lagerbockes (121) bewegbar angeordnet ist;
c) das Stellelement (122) besitzt eine quer zu seiner Längsachse verlaufende Kurvenbahn (117), in welche sich ein am Gehäuse (1, 27) oder am Lagerbock (121) angeordnetes stiftartiges Bauteil (118) hineinerstreckt;
d) das Stellglied (59) ist zwischen dem Einlaß- und Auslaßventil (53, 54, 55) des Bremsdruckregelventils (II) und dem Stellelement (122) angeordnet;
e) das stiftartige Bauteil (118) und das Stellelement (122) mit Kurvenbahn (117) wirken in der Weise zusammen, daß bei einer Drehbewegung des Stellelementes (122) um seine Längsachse, je nach Drehrichtung, das Stellelement (122) mittels der Kurvenbahn (117) und des stiftartigen Bauteiles (118) in Richtung auf das Einlaßventil (53, 54) und das Auslaßventil (55, 54) des Bremsdruckregelventils (II) zu bzw. von diesem weg bewegt wird;
f) das Stellelement (122) und das Stellglied (59) sind so zueinander angeordnet, daß das Stellglied (59) bei einer Bewegung des Stellelementes (122) in Richtung auf das Einlaßventil (53, 54) und das Auslaßventil (55, 54) des Bremsdruckregelventils (II) zu vom Stellelement (122) in Richtung auf das Einlaßventil (53, 54) und das Auslaßventil (55, 54) des Bremsdruckregelventils (II) zu verschiebbar ist.

13. Lastabhängig steuerbare Bremskraftregeleinrichtung nach wenigstens einem der vorhergehenden Ansprüche 1 bis 4, gekennzeichnet durch die folgenden Merkmale:
a) die Antriebseinrichtung (III) für das lastabhängig verstellbare Stellglied (59) besitzt einen Lagerbock (121), welcher an der dem Einlaßventil (53, 54) und dem Auslaßventil (55, 54) des Bremsdruckregelventils (II) gegenüberliegenden Seite des Gehäuses (1, 27) des Bremsdruckregelventils (II) angeordnet ist;
b) der Lagerbock (121) besitzt eine in Richtung der Längsachse von Stellglied (59) sowie Einlaßventil (53, 54) und Auslaßventil (55, 54) des Bremsdruckregelventils (II) verlaufende Öffnung (120), in welcher das Stellelement (122) um seine Längsachse drehbar und in Richtung der Längsachse des Lagerbockes (121) bewegbar angeordnet ist;
c) am Lagerbock (121) oder am Gehäuse (1, 27) ist eine quer zur Längsachse des Lagerbockes (121) bzw. Gehäuses (1, 27) verlaufende Kurvenbahn angeordnet, in welche sich ein am Stellelement (122) angeordnetes stiftartiges Bauteil hineinerstreckt;
d) das Stellglied (59) ist zwischen dem Einlaß- und Auslaßventil (53, 54, 55) des Bremsdruckregelventils (II) und dem Stellelement (122) angeordnet;
e) die Kurvenbahn und das Stellelement (122) mit dem stiftartigen Bauteil wirken in der Weise zusammen, daß bei einer Drehbewegung des Stellelementes (122) um seine Längsachse, je nach Drehrichtung, das Stellelement (122i mittels der Kurvenbahn und des Stiftes in Richtung auf das Einlaßventil (53, 54) und das Auslaßventil (55, 54) des Bremsdruckregelventils (II) zu bzw. von diesem weg verschoben wird;
f) das Stellelement (122) und das Stellglied (59) sind so zueinander angeordnet, daß das Stellglied (59) bei einer Bewegung des Stellelementes (122) in Richtung auf das Einlaßventil (53, 54) und das Auslaßventil (55, 54) des Bremsdruckregelventils (II) zu vom Stellelement (122) in Richtung auf das Einlaßventil (53, 54) und das Auslaßventil (55, 54) des Bremsdruckregelventils (II) zu verschiebbar ist.

14. Lastabhängig steuerbare Bremskraftregeleinrichtung nach Anspruch 12, dadurch gekennzeichnet, daß das stiftartige Bauteil (118) exzentrisch an einem zapfenartigen Bauteil (119) angeordnet ist, und daß das zapfenartige Bauteil (119) um seine Längsachse drehbar so am Gehäuse (1, 27) oder am Lagerbock (121) angeordnet ist, daß durch Drehen des zapfenartigen Bauteiles (119) um seine Längsachse, je nach Drehrichtung, das Stellelement (122) in Richtung auf das Einlaßventil (53, 54) und das Auslaßventil (55, 54) des Bremsdruckregelventils (II) zu bzw. von diesem weg verstellbar ist.

15. Lastabhängig steuerbare Bremskraftregeleinrichtung nach wenigstens einem der vorhergehenden Ansprüche 1 bis 4, gekennzeichnet durch die folgenden Merkmale:
a) die Antriebseinrichtung (III) für das lastabhängig verstellbare Stellglied (59) besitzt einen Lagerbock (121), welcher an der dem Einlaßventil (53, 54) und dem Auslaßventil (55, 54) des Bremsdruckregelventils (II) gegenüberliegenden Seite des Gehäuses (1, 27) des Bremsdruckregelventils (II) angeordnet ist;
b) der Lagerbock (121) besitzt eine in Richtung der Längsachse von Stellglied (59) sowie Einlaßventil (53, 54) und Auslaßventil (55, 54) des Bremsdruckregelventils (II) verlaufende Öffnung (120), in welcher das Stellelement (123) um seine Längsachse drehbar angeordnet ist;
c) das Stellelement (123) besitzt an seiner dem Stellglied (59) zugewandten Seite wenigstens eine erste Steuerkurve (126, 127, 125, 137, 135, 136);
d) zwischen dem Stellglied (59) und der die erste Steuerkurve (126, 127, 125, 137, 135, 136) aufweisenden Seite des Stellelementes (123) ist in der Öffnung (120) ein Betätigungselement (128) für das Stellglied (59) in Richtung der Längsachse der Öffnung (120) bewegbar angeordnet;
e) das Betätigungselement (128) besitzt auf seiner der ersten Steuerkurve (126, 127, 125, 137, 135, 136) zugewandten Seite eine zweite Steuerkurve (129, 124, 138), wobei die erste Steuerkurve (126, 127, 125, 137, 135, 136) und die zweite Steuerkurve (129, 124, 138) so ausgebildet sind, daß sie aneinander zur Anlage bringbar sind;
f) das Betätigungselement (128) ist mittels einer Verdrehsicherung (130, 131) gegen Verdrehen um seine Längsachse gesichert;
g) das Stellelement (123) ist mittels Sicherungsmitteln (132, 133, 134) gegen eine unbeabsichtigte Bewegung in Richtung der Längsachse der Öffnung (120) gesichert;
h) das Stellelement (123) mit erster Steuerkurve (126, 127, 125, 137, 135, 136) und das Betätigungselement (128) mit zweiter Steuerkurve (129, 124, 138) sind so zueinander angeordnet und wirken in der Weise zusammen, daß bei einer Drehbewegung des Stellelementes (123) um seine Längsachse das Betätigungselement (128) vom Stellelement (123) in Richtung auf das Einlaßventil (53, 54) und das Auslaßventil (55, 54) des Bremsdruckregelventils (II) zu verschoben wird;
i) das Stellglied (59) ist zwischen dem Einlaß- und Auslaßventil (53, 54, 55) des Bremsdruckregelventils (II) und dem Betätigungselement (128) angeordnet;
k) das Stellelement (123) und das Betätigungselement (128) sind so zum Stellglied (59) angeordnet, daß bei einer Drehbewegung des Stellelementes (123) um seine Längsachse und einer dadurch bewirkten Bewegung des Betätigungselementes (128) in Richtung auf das Einlaßventil (53, 54) und das Auslaßventil (55, 54) des Bremsdruckregelventils (II) zu das Stellglied (59) vom Stellelement (123) und dem Betätigungselement (128) in Richtung auf das Einlaßventil (53, 54) und das Auslaßventil (55, 54) des Bremsdruckregelventils (II) zu verschiebbar ist.

16. Lastabhängig steuerbare Bremskraftregeleinrichtung nach Anspruch 15, dadurch gekennzeichnet, daß die Sicherungsmittel (132, 134, 133) für das Stellelement (123) von einer Umfangsnut (132) im Stellelement (123) und einem stiftartigen Bauteil (134), welches direkt oder indirekt am Lagerbock (121) oder am Gehäuse (1, 27) angeordnet ist und sich in die Umfangsnut (132) des Stellelementes (123) hineinerstreckt, gebildet werden.

17. Lastabhängig steuerbare Bremskraftregeleinrichtung nach Anspruch 16, dadurch gekennzeichnet, daß das stiftartige Bauteil (134) exzentrisch an einem zapfenartigen Bauteil (133) angeordnet ist, und daß das zapfenartige Bauteil (133) um seine Längsachse drehbar so am Lagerbock (121) oder am Gehäuse (1, 27) angeordnet ist, daß durch Drehen des zapfenartigen Bauteiles (133) um seine Längsachse, je nach Drehrichtung, das Stellelement (123) in Richtung auf das Einlaßventil (53, 54) und das Auslaßventil (55, 54) des Bremsdruckregelventils (II) zu bzw. von diesem weg verstellbar ist.

18. Lastabhängig steuerbare Bremskraftregeleinrichtung nach Anspruch 15, dadurch gekennzeichnet, daß die Verdrehsicherung (131, 130) für das Betätigungselement (128) von einer in das Betätigungselement (128) eingearbeiteten, in Richtung der Längsachse des Betätigungselementes (128) verlaufenden Nut (131) und einem stiftartigen Bauteil (130), welches am Lagerbock (121) oder am Gehäuse (1, 27) angeordnet ist, und sich in die Nut (131) hineinerstreckt, gebildet wird.

19. Lastabhängig steuerbare Bremskraftregeleinrichtung nach wenigstens einem der vorhergehenden Ansprüche 5, 6, 7, 8, 12, 13, 14, 15, 16, 17 oder 18, dadurch gekennzeichnet, daß der Lagerbock zur Aufnahme des Stellelementes (81, 122, 123) von dem die Öffnung (64, 120) aufweisenden Bereich des Gehäuses (1, 27) gebildet wird.

20. Lastabhängig steuerbare Bremskraftregeleinrichtung nach Anspruch 18, dadurch gekennzeichnet, daß das stiftartige Bauteil (130) an einem zapfenartigen Bauteil exzentrisch angeordnet ist und daß das zapfenartige Bauteil um seine Längsachse drehbar am Lagerbock (121) oder am Gehäuse (1, 27) so angeordnet ist, daß durch Drehen des zapfenartigen Bauteiles um seine Längsachse, je nach Drehrichtung, das Betätigungselement (128) mittels des an einem Anschlag des Betätigungselementes (128) angreifenden stiftartigen Bauteiles (130) in Richtung auf das Einlaßventil (53, 54) und das Auslaßventil (55, 54) des Bremsdruckregelventils (II) zu bzw. von diesem weg verstellbar ist.

## Claims

1. Brake-pressure-regulating device, controllable in dependence upon load, for a pressure-medium-operated vehicle brake unit, which device has the following features:
a) a brake-pressure control valve (II) is provided, which has an inlet valve (53, 54) and an outlet valve (55, 54);
b) a brake-pressure control piston (28, 24) is used to operate the inlet valve (53, 54) and the outlet valve (55, 54) of the brake-pressure control valve (II);
c) the control variable of the brake-pressure control valve (II) from empty load to full load is settable by means of a control member (59) which is displaceable in dependence upon load;
d) a drive means (III) is used for the load-dependent displacement of the control member (59);
e) a relay valve (I) connected downstream of the brake-pressure control valve (II) is provided, which relay valve has an inlet valve (7, 9) and an outlet valve (12, 9);
f) a relay piston (19) is used to operate the inlet valve (7, 9) and the outlet valve (12, 9) of the relay valve (I);
g) the brake-pressure control valve (II) and the relay valve (I) are combined to form one structural unit;
h) the brake-pressure control piston (28, 24), the inlet valve (53, 54) and the outlet valve (55, 54) of the brake-pressure control valve (II), and the control member (59) are arranged to be movable in the direction of the longitudinal axis of the brake-pressure control valve (II);
i) the relay piston (19) and also the inlet valve (7, 9) and the outlet valve (12, 9) of the relay valve (I) are arranged to be movable in the direction of the longitudinal axis of the relay valve (I);
k) the brake-pressure control valve (II) and the relay valve (I) are so arranged in relation to each other that the longitudinal axis of the brake-pressure control valve (II) extends transversely to the longitudinal axis of the relay valve (I);
l) the brake-pressure control valve (II) has an air venting chamber (60), which is connectable by way of the outlet valve (54, 55) of the brake-pressure control valve (II) to the pressure-medium outlet chamber (56) of the brake-pressure control valve (II);
m) the relay valve (I) has a pressure-medium outlet (10) leading to the pressure medium sink;
n) the pressure-medium outlet (10) of the relay valve (I) is connectable by way of the outlet valve (7, 12) of the relay valve (I) to the pressure-medium outlet chamber (3) of the relay valve (I);
characterised by the following features:
o) a pressure-medium line (11), arranged in the brake-pressure-regulating device, is provided which connects the air venting chamber (60) of the brake-pressure control valve (II) to the pressure-medium outlet (10) of the relay valve (I);
p) the drive means (III) has a control element (81, 96, 108, 122, 123) which, for operation of the control member (59), is in, or can be brought into, operative connection with the control member (59) directly or by way of an actuating element (67, 128), wherein the control element (81, 96, 108, 122, 123) and the actuating element (67, 128), or the control element (81, 96, 108, 122, 123), as the case may be, are or is arranged at least approximately equiaxially with the control member (59), and the actuating element (67, 128) or the control element is movable in the direction of the longitudinal axis of the control member (59) for the purpose of displacing the control member (59), and wherein the control element (81, 96, 108, 122, 123) is operated in dependence upon load as a result of being acted upon by wheel suspension pressure or by means of an electric control motor (109) in the direction of the longitudinal axis of the control member (59) or as a result of rotation about its longitudinal axis.

2. Brake-pressure-regulating device, controllable in dependence upon load, according to claim 1, characterised in that the inlet and outlet valves (53, 54, 55) of the brake-pressure control valve (II), the brake-pressure control piston (28, 24), the control member (59) of the brake-pressure control valve (II), and the drive means (III) are arranged equiaxially with respect to one another.

3. Brake-pressure-regulating device, controllable in dependence upon load, according to claim 1, characterised by the following features:
a) the relay piston (19) and also the inlet valve (7,9) and the outlet valve (12, 9) of the relay valve (I) are arranged in a first housing (1, 2, 17);
b) the brake-pressure control piston (28, 24), the inlet valve (53, 54) and the outlet valve (55, 54) and also the control member (59) of the brake-pressure control valve (II) are arranged in a second housing (1, 27);
c) the brake-pressure control valve (II) has a pressure-medium inlet chamber (33), a pressure-medium outlet chamber (56) and a control chamber (44), wherein the pressure-medium outlet chamber (56) is, as desired, connectable to the pressure medium inlet chamber (33) or to a pressure medium sink, or can be isolated from both;
d) the relay valve (I) has a pressure-medium inlet chamber (13), a pressure-medium outlet chamber (3) and a control chamber (21), wherein the pressure-medium outlet chamber (3) is, as desired, connectable to the pressure-medium inlet chamber (13) or to a pressure-medium sink, or can be isolated from both;
e) the pressure-medium outlet chamber (56) of the brake-pressure control valve (II) is connected by way of a pressure medium line (20) to the control chamber (21) of the relay valve (I).

4. Brake-pressure-regulating device, controllable in dependence upon load, according to claim 3, characterised by the following features:
a) the housing (1, 2, 17) for the relay valve (I) and the housing (1, 27) for the brake-pressure control valve (II) have a common wall (1) which separates the control chamber (21) of the relay valve (I) from the pressure-medium outlet chamber (56) of the brake-pressure control valve (II);
b) the pressure-medium line (20) used to connect the control chamber (21) of the relay valve (I) to the pressure-medium outlet chamber (56) of the brake-pressure control valve (II) is a channel passing through the housing wall (1).

5. Brake-pressure-regulating device, controllable in dependence upon load, according to at least one of the preceding claims, characterised by the following features:
a) the drive means (III) for the control member (59) displaceable in dependence upon load has a bearing block (90, 86), which is arranged at the side of the housing (1, 27) of the brake-pressure control valve (II) opposite to the inlet valve (53, 54) and the outlet valve (55, 54) of the brake-pressure control valve (II);
b) the bearing block (90, 86) has an aperture (140) that extends in the direction of the longitudinal axis of the control member (59) and also of the inlet valve (53, 54) and outlet valve (55, 54) of the brake-pressure control valve (II), in which aperture the control element (81) is arranged to be rotatable about its longitudinal axis;
c) the control element (81) has a recess (72) extending in the direction of its longitudinal axis, in which recess a ram-like actuating element (67) for the control member (59) is arranged to be movable in the direction of the longitudinal axis of the control element (81);
d) the control member (59) is arranged between the inlet and outlet valves (53, 54, 55) of the brake-pressure control valve (II) and the actuating element (67);
e) arranged on the actuating element (67), extending transversely to the longitudinal axis of the actuating element (67), is a pin (73) which extends away from the actuating element (67), through a guide (71, 89) arranged in the control element (81) [the guide extending in the direction of the longutidunal axis of the control element and into a curved track (79, 85) arranged in the bearing block (90, 86), the control element (81), the actuating element (67) with pin (73), and the curved track (79, 85) so acting together that, on rotation of the control element (81) about its longitudinal axis, the ram-like actuating element (67) is displaced towards or away from the inlet valve (53, 54) and the outlet valve (55, 54) of the brake-pressure control valve (II), depending on the direction of rotation;
f) the actuating element (67) and the control member (59) are so arranged in relation to each other that, when the actuating element (67) moves towards the inlet valve (53, 54) and the outlet valve (55, 54) of the brake-pressure control valve (II), the control member (59) is displaceable by the actuating element (67) towards the inlet valve (53, 54) and the outlet valve (55, 54).

6. Brake-pressure-regulating device, controllable in dependence upon load, according to claim 5, characterised by the following features:
a) the guide (71, 89) for the pin (73) arranged on the ram-like actuating element (67) is formed by a slot arranged in the control element (81);
b) the curved track (79, 85) arranged in the bearing block (90, 86) is formed by a slot in the bearing block (90, 86), the slot extending substantially transversely to the longitudinal axis of the bearing block (90, 86).

7. Brake-pressure-regulating device, controllable in dependence upon load, according to at least one of the preceding claims 1 to 4, characterised by the following features:
a) the drive means (III) for the control member (59) displaceable in dependence upon load has a bearing block that is arranged at the side of the housing (1, 27) of the brake-pressure control valve (II) opposite to the inlet valve (53, 54) and the outlet valve (55, 54) of the brake-pressure control valve (II);
b) the bearing block (90, 86) has an aperture (140) extending in the direction of the longitudinal axis of the control member (59) and of the inlet valve (53, 54) and outlet valve (55, 54) of the brake-pressure control valve (II), in which aperture the control element (81) is arranged to be rotatable about its longitudinal axis;
c) the control element (81) has a recess (72) extending in the direction of its longitudinal axis, in which recess a ram-like actuating element (67) for the control member (59) is arranged to be movable in the direction of the longitudinal axis of the control element (81);
d) the control member (59) is arranged between the inlet and outlet valves (53, 54, 55) and the actuating element (67);
e) arranged on the actuating element (67), extending transversely to the longitudinal axis of the actuating element (67) and away from that element, is a pin (73) which extends through a curved track arranged in the control element (81) [the curved track being arranged on the control element (81) and extending transversely to the longitudinal axis of the control element (81)] and into a guide that is arranged in the bearing block (90, 86) and that extends in the direction of the longitudinal axis of the bearing block (90, 86), the control element (81), the ram-like actuating element (67) with pin (73) and the curved track so acting together that, on rotation of the control element (81) about its longitudinal axis, the ram-like actuating element (67) for the control member (59) is displaced towards or away from the inlet valve (53, 54) and the outlet valve (55, 54) of the brake-pressure control valve (II), depending on the direction of rotation;
f) the actuating element (67) and the control member (59) are so arranged in relation to each other that, when the actuating element (67) moves towards the inlet valve (53, 54) and the outlet valve (55, 54), the control member (59) is displaceable by the actuating element (67) towards the inlet valve (53, 54) and the outlet valve (55, 54).

8. Brake-pressure-regulating device, controllable in dependence upon load, according to claim 7, characterised by the following features:
a) the guide for the pin (73) arranged on the ram-like actuating element (67) is formed by a slot arranged in the bearing block (90, 86);
b) the curved track arranged in the control element (81) is formed by a slot in the control element (81), the slot extending substantially transversely to the longitudinal axis of the control element (81).

9. Brake-pressure-regulating device, controllable in dependence upon load, according to at least one of the preceding claims, characterised in that there is arranged in or on the housing (1, 27) of the brake-pressure control valve (II) a pilot valve for influencing the pressure build-up in the control chamber (44) of the brake-pressure control valve.

10. Brake-pressure-regulating device, controllable in dependence upon load, according to at least one of the preceding claims 1 to 4, characterised in that the drive means (III) is formed by a piston (92, 96) which, acted upon by a pressure medium, is arranged to be movable in the housing (1, 27) of the brake-pressure control valve (II), against the force of a spring (106), towards the inlet valve (53, 54) and the outlet valve (55, 54) of the brake-pressure control valve (II), wherein the piston (92, 96) is arranged on the side of the control member (59) of the brake-pressure control valve (II) remote from the inlet valve (53, 54) and the outlet valve (55, 54) of the brake-pressure control valve (II), and is in, or can be brought into, operative connection with the control member (59) in such a manner that, when the piston (92, 96) moves in the direction of the inlet valve (53, 54) and the outlet valve (55, 54) of the brake-pressure control valve (II), the control member (59) is displaceable by the piston (92, 96) in the same direction.

11. Brake-pressure-regulating device, controllable in dependence upon load, according to at least one of the preceding claims 1 to 4, characterised in that the drive means (III) for the control member (59) of the brake-pressure control valve (II) is formed by an electrical control motor (109), which is arranged in or on the housing (1, 27) of the brake-pressure control valve (II) and has a spindle (108) which is in operative connection with the control member (59) of the brake-pressure control valve (II) in such a manner that the control member (59) is movable by means of the spindle (108) towards or away from the inlet valve (53, 54) and the outlet valve (55, 54) of the brake-pressure control valve (II).

12. Brake-pressure-regulating device, controllable in dependence upon load, according to at least one of the preceding claims 1 to 4, characterised by the following features:
a) the drive means (III) for the control member (59) displaceable in dependence upon load has a bearing block (121), which is arranged at the side of the housing (1, 27) of the brake-pressure control valve (II) opposite to the inlet valve (53, 54) and the outlet valve (55, 54) of the brake-pressure control valve (II);
b) the bearing block (121) has an aperture (120) extending in the direction of the longitudinal axis of the control member (59) and of the inlet valve (53, 54) and outlet valve (55, 54) of the brake-pressure control valve (II), in which aperture the control element (122) is arranged to be rotatable about its longitudinal axis and to be movable in the direction of the longitudinal axis of the bearing block (121);
c) the control element (122) has a curved track (117) extending transversely to its longitudinal axis, into which track there extends a pin-like component (118) arranged on the housing (1, 27) or on the bearing block (121);
d) the control member (59) is arranged between the inlet and outlet valves (53, 54, 55) of the brake-pressure control valve (II) and the contol element (122);
e) the pin-like component (118) and the control element (122) with curved track (117) so act together that, on rotation of the control element (122) about its longitudinal axis, the control element (122) is moved by the curved track (117) and the pin-like component (118) towards or away from the inlet valve (53, 54) and the outlet valve (55, 54) of the brake-pressure control valve (II), depending on the direction of rotation;
f) the control element (122) and the control member (59) are so arranged in relation to each other that, when the control element (122) moves towards the inlet valve (53, 54) and the outlet valve (55, 54) of the brake-pressure control valve (II), the control member (59) is displaceable by the control element (122) towards the inlet valve (53, 54) and the outlet valve (55, 54) of the brake-pressure control valve (II).

13. Brake-pressure-regulating device, controllable in dependence upon load, according to at least one of the preceding claims 1 to 4, characterised by the following features:
a) the drive means (III) for the control member (59) displaceable in dependence upon load has a bearing block (121) that is arranged at the side of the housing (1, 27) of the brake-pressure control valve (II) opposite to the inlet valve (53, 54) and the outlet valve (55, 54) of the brake-pressure control valve (II);
b) the bearing block (121) has an aperture (120) extending in the direction of the longitudinal axis of the control member (59) and of the inlet valve (53, 54) and the outlet valve (55, 54) of the brake-pressure control valve (II), in which aperture the control element (122) is arranged to be rotatable about its longitudinal axis and to be movable in the direction of the longitudinal axis of the bearing block (121);
c) there is arranged on the bearing block (121) or on the housing (1, 27) a curved track which extends transversely to the longitudinal axis of the bearing block (121) and of the housing (1, 27), into which curved track there extends a pin-like component arranged on the control element (122);
d) the control member (59) is arranged between the inlet and outlet valves (53, 54, 55) of the brake-pressure control valve (II) and the control element (122);
e) the curved track and the control element (122) with the pin-like component so act together that, on rotation of the control element (122) about its longitudinal axis, the control element (122) is displaced by the curved track and the pin towards or away from the inlet valve (53, 54) and the outlet valve (55, 54) of the brake-pressure control valve (II), depending on the direction of rotation;
f) the control element (122) and the control member (59) are so arranged in relation to each other that, when the control element (122) moves towards the inlet valve (53, 54) and the outlet valve (55, 54) of the brake-pressure control valve (II), the control member (59) is displaceable by the control element (122) towards the inlet valve (53, 54) and the outlet valve (55, 54) of the brake-pressure control valve (II).

14. Brake-pressure-regulating device, controllable in dependence upon load, according to claim 12, characterised in that the pin-like component (118) is eccentrically arranged on a peg-like component (119), and the peg-like component (119) is so arranged on the housing (1, 27) or on the bearing block (121) to be rotatable about its longitudinal axis that, by means of rotation of the peg-like component (119) about its longitudinal axis, the control element (122) is displaceable towards or away from the inlet valve (53, 54) and the outlet valve (55, 54) of the brake-pressure control valve (II), depending on the direction of rotation.

15. Brake-pressure-regulating device, controllable in dependence upon load, according to at least one of the preceding claims 1 to 4, characterised by the following features:
a) the drive means (III) for the control member (59) displaceable in dependence upon load has a bearing block (121) that is arranged at the side of the housing (1, 27) of the brake-pressure control valve (II) opposite to the inlet valve (53, 54) and the outlet valve (55, 54) of the brake-pressure control valve (II);
b) the bearing block (121) has an aperture (120) extending in the direction of the longitudinal axis of the control member (59) and of the inlet valve (53, 54) and outlet valve (55, 54) of the brake-pressure control valve (II), in which aperture the control element (123) is arranged to be rotatable about its longitudinal axis;
c) the control element (123) has on its side facing the control member (59) at least a first control curve (126, 127, 125, 137, 135, 136);
d) between the control member (59) and the side of the control element (123) having the first control curve (126, 127, 125, 137, 135, 136), an actuating element (128) for the control member (59) is arranged to be movable in the aperture (120) in the direction of the longitudinal axis of the aperture (120);
e) the actuating element (128) has on its side facing the first control curve (126, 127, 125, 137, 135, 136) a second control curve (129, 124, 138), the first control curve (126, 127, 125, 137, 135, 136) and the second control curve (129, 124, 138) being so formed that they can be brought into abutment with one another;
f) the actuating element (128) is safeguarded from rotating about its longitudinal axis by means of a safety device (130, 131);
g) the control element (123) is safeguarded against unintentional movement in the direction of the longitudinal axis of the aperture (120) by security means (132, 133, 134);
h) the control element (123) with first control curve (126, 127, 125, 137, 135, 136) and the actuating element (128) with second control curve (129, 124, 138) arc so arranged in relation to each other and act together that, on rotation of the control element (123) about its longitudinal axis, the actuating element (128) is displaced by the control element (123) towards the inlet valve (53, 54) and the outlet valve (55, 54) of the brake-pressure control valve (II);
i) the control member (59) is arranged between the inlet and outlet valves (53, 54, 55) of the brake-pressure control valve (II) and the actuating element (128);
k) the control element (123) and the actuating element (128) are so arranged with respect to the control member (59) that, when the control element (123) rotates about its longitudinal axis and the actuating element (128) is thereby caused to move towards the inlet valve (53, 54) and the outlet valve (55, 54) of the brake-pressure control valve (II), the control member (59) is displaceable by the control element (128) and the actuating element (128) towards the inlet valve (53, 54) and the outlet valve (55, 54) of the brake-pressure control valve (II).

16. Brake-pressure-regulating device, controllable in dependence upon load, according to claim 15, characterised in that the security means (132, 134, 133) for the control element (123) are formed by a circumferential groove (132) in the control element (123) and a pin-like component (134) that is arranged directly or indirectly on the bearing block (121) or on the housing (1, 27) and extends into the circumferential groove (132) of the control element (123).

17. Brake-pressure-regulating device, controllable in dependence upon load, according to claim 16, characterised in that the pin-like component (134) is eccentrically arranged on a peg-like component (133), and the peg-like component (133) is so arranged on on the bearing block (121) or on the housing (1, 27) to be rotatable about its longitudinal axis that, by means of rotation of the peg-like component (133) about its longitudinal axis, the control element (123) is displaceable towards or away from the inlet valve (53, 54) and the outlet valve (55, 54) of the brake-pressure control valve (II), depending on the direction of rotation.

18. Brake-pressure-regulating device, controllable in dependence upon load, according to claim 15, characterised in that the safety device (131, 130) for safeguarding the actuating element (128) from rotation is formed by a groove (131), which is incorporated in the actuating element (128) and extends in the direction of the longitudinal axis of the actuating element (128), and a pin-like component (130), which is arranged on the bearing block (121) or on the housing (1, 127) and extends into the groove (131).

19. Brake-pressure-regulating device, controllable in dependence upon load, according to at least one of the preceding claims 5, 6, 7, 8, 12, 13, 14, 15, 16, 17 and 18, characterised in that the bearing block for receiving the control element (81,122, 123) is formed by the region of the housing (1, 27) comprising the aperture (64, 120).

20. Brake-pressure-regulating device, controllable in dependence upon load, according to claim 18, characterised in that the pin-like component (130) is eccentrically arranged on a peg-like component and the peg-like component is so arranged on the bearing block (121) or on the housing (1, 27) to be rotatable about its longitudinal axis that, by means of rotation of the peg-like component about its longitudinal axis, the actuating element (128) is displaceable towards or away from the inlet valve (53, 54) and the outlet valve (55, 54) of the brake-pressure control valve (II), depending on the direction of rotation, by means of the pin-like component (130) engaging on a stop on the actuating element (128).

## Revendications

1. Dispositif de régulation de force de freinage à commande en fonction de la charge pour une installation de freinage de véhicule automobile alimentée avec un fluide sous pression, présentant les éléments suivants :
a) il est prévu une valve de régulation de pression de freinage (II) qui possède une valve d'admission (53, 54) et une valve de sortie (55, 54) ;
b) il est prévu un piston de régulation de pression de freinage (28, 24) servant à actionner la valve d'admission (53, 54) et de la valve de sortie (55, 54) de la valve de régulation de pression de freinage (II) ;
c) la grandeur de régulation de la valve de régulation de pression de freinage (II) depuis la charge à vide jusqu'à la pleine charge est réglable au moyen d'un organe un de positionnement (59) susceptible d'être déplacé en fonction de la charge ;
d) un dispositif d'entraînement (III) sert au déplacement de l'organe de positionnement (59) en fonction de la charge ;
e) il est prévu une valve-relais (I) branchée en aval de la valve de régulation de pression de freinage (II), qui comprend une valve d'admission (7, 9) et une valve de sortie (12, 9) ;
f) un piston-relais (19) sert à l'actionnement de la valve d'admission (7, 9) et de la valve de sortie (12, 9) de la valve-relais (I) ;
g) la valve de régulation de pression de freinage (II) et la valve relais (I) sont regroupées pour former une unité structurelle ;
h) le piston de régulation de pression de freinage (28, 24), la valve d'admission (53, 54) et la valve de sortie (55, 54) de la valve de régulation de pression de freinage (II), ainsi que l'organe de positionnement (59) sont agencés avec faculté de déplacement en direction de l'axe longitudinal de la valve de régulation de pression de freinage (II) ;
i) le piston-relais (19) ainsi que la valve d'admission (7, 9) et la valve de sortie (12, 9) de la valve-relais (I) sont agencés avec faculté de déplacement en direction de l'axe longitudinal de la valve-relais (I) ;
k) la valve de régulation de pression de freinage (II) et la valve-relais (I) sont ainsi agencées l'une par rapport à l'autre que l'axe longitudinal de la valve de régulation de pression de freinage (II) s'étend transversalement à l'axe longitudinal de la valve-relais (I) ;
l) la valve de régulation de pression de freinage (II) comporte un espace de mise à l'air (60), susceptible d'être relié à la chambre de sortie de fluide sous pression (56) de la valve de régulation de pression de freinage (II) par l'intermédiaire de la valve de sortie (54, 55) de la valve de régulation de pression de freinage (II) ;
m) la valve-relais (I) comprend une sortie de fluide sous pression (10) qui mène à la bâche à fluide sous pression ;
n) la sortie de fluide sous pression (10) de la valve relais (I) est susceptible d'être reliée à la chambre de sortie de fluide sous pression (3) de la valve-relais (I) par l'intermédiaire de la valve de sortie (7, 12) de la valve-relais (I) ;
caractérisé par les éléments suivants :
o) il est prévu une conduite à fluide sous pression, disposée dans le dispositif de régulation de force de freinage, qui relie l'espace de mise à l'air (60) de la valve de régulation de pression de freinage (II) avec la sortie de fluide sous pression (10) de la valve-relais (I) ; et
p) le dispositif d'entraînement (III) comprend un élément de positionnement (81, 96, 108, 122, 123) en liaison d'action, ou susceptible d'être amené en liaison d'action, avec l'organe de positionnement (59) pour l'actionnement de celui-ci, directement ou par l'intermédiaire d'un élément d'actionnement (67, 128), et l'élément de positionnement (81, 96, 108, 122, 123) ainsi que l'élément d'actionnement (67, 128), ou respectivement l'élément de positionnement (81,96, 108, 122, 123) seul sont agencés au moins approximativement coaxialement vis-à-vis de l'organe de positionnement (59), et en vue du déplacement de l'organe de positionnement (59), l'élément d'actionnement (67, 128) ou bien l'élément de positionnement sont mobiles en direction de l'axe longitudinal de l'organe de positionnement (59), et l'élément de positionnement (81, 96, 108, 122, 123) est actionné en fonction de la charge soit en direction de l'axe longitudinal de l'organe de positionnement (59), soit par rotation autour de son axe longitudinal, par sollicitation avec la pression de suspension des roues, ou par un moteur de positionnement électrique (109).

2. Dispositif de régulation de force de freinage à commande en fonction de la charge, selon la revendication 1, caractérisé en ce que la valve d'admission et la valve de sortie (53, 54, 55) de la valve de régulation de pression de freinage (II), le piston de régulation de pression de freinage (28, 24), l'organe de positionnement (59) de la valve de régulation de pression de freinage (II), et le dispositif d'entraînement (III) sont agencés coaxialement les uns par rapport aux autres.

3. Dispositif de régulation de force de freinage à commande en fonction de la charge, selon la revendication 1, caractérisé par les caractéristiques suivantes :
a) le piston-relais (19) ainsi que la valve d'admission (7, 9) et la valve de sortie (12, 9) de la valve-relais (I) sont agencés dans un premier boîtier (1, 2, 17);
b) le piston de régulation de pression de freinage (28, 24), la valve d'admission (53, 54) et la valve de sortie (55, 54) ainsi que l'organe de positionnement (59) de la valve de régulation de pression de freinage (II) sont agencés dans un deuxième boîtier (1, 27) ;
c) la valve de régulation de pression de freinage (II) possède une chambre d'entrée à fluide sous pression (33), une chambre de sortie à fluide sous pression (56) et une chambre de commande (44), ladite chambre de sortie à fluide sous pression (56) pouvant être reliée au choix avec la chambre d'entrée à fluide sous pression (33) ou avec une bâche à fluide sous pression, ou encore isolée vis-à-vis des deux ;
d) la valve-relais (I) possède une chambre d'entrée à fluide sous pression (13), une chambre de sortie à fluide sous pression (3) et une chambre de commande (21), ladite chambre de sortie à fluide sous pression (3) pouvant être reliée au choix avec la chambre d'entrée à fluide sous pression (13) ou avec une bâche à fluide sous pression, ou encore isolée vis-à-vis des deux ;
e) la chambre de sortie à fluide sous pression (56) de la valve de régulation de pression de freinage (II) est reliée à la chambre de commande (21) de la valve-relais (I) par l'intermédiaire d'une conduite à fluide sous pression (20).

4. Dispositif de régulation de force de freinage à commande en fonction de la charge, selon la revendication 3, caractérisé par les caractéristiques suivantes :
a) le boîtier (1, 2, 17) de la valve-relais (I) et le boîtier (1, 27) de la valve de régulation de pression de freinage (II) possèdent une paroi de boîtier commune (1) qui sépare la chambre de commande (21) de la valve-relais (I) par rapport à la chambre de sortie à fluide sous pression (56) de la valve de régulation de pression de freinage (II) ;
b) un canal qui traverse la paroi de boîtier (1) sert de conduite à fluide sous pression (20) pour la liaison de la chambre de commande (21) de la valve-relais (I) avec la chambre de sortie à fluide sous pression (56) de la valve de régulation de pression de freinage (II).

5. Dispositif de régulation de force de freinage à commande en fonction de la charge, selon l'une au moins des revendications précédentes, caractérisé par les caractéristiques suivantes :
a) le dispositif d'entraînement (III) pour l'organe de positionnement (59) susceptible d'être déplacé en fonction de la charge possède un bloc de montage (90, 86), agencé sur le boîtier (1, 27) de la valve de régulation de pression de freinage (II) et ceci du côté opposé à la valve d'admission (53, 54) et à la valve de sortie (55, 54) de la valve de régulation de pression de freinage (II) ;
b) le bloc de montage (90, 86) possède une ouverture (140) qui s'étend en direction de l'axe longitudinal de l'organe de positionnement (59) ainsi que de la valve d'admission (53, 54) et de la valve de sortie (55, 54) de la valve de régulation de pression de freinage (II), ouverture dans laquelle l'élément de positionnement (81) est agencé avec faculté de rotation autour de son axe longitudinal ;
c) l'élément de positionnement (81) comporte un évidement (72) qui s'étend en direction de son axe longitudinal et dans lequel un élément d'actionnement (67) en forme de poussoir pour l'organe de positionnement (59) est agencé avec faculté de déplacement en direction de l'axe longitudinal de l'élément de positionnement (81) ;
d) l'organe de positionnement (59) est agencé entre la valve d'admission et la valve de sortie (53, 54, 55) de la valve de régulation de pression de freinage (II) et l'élément d'actionnement (67) ;
e) une tige (73) est agencée sur l'élément d'actionnement (67) de manière à s'étendre en éloignement de l'élément d'actionnement (67) et perpendiculairement à l'axe longitudinal de l'élément d'actionnement (67), ladite tige traversant un guidage (71, 89) agencé dans l'élément de positionnement (81) en direction de l'axe longitudinal de l'élément de positionnement (81), et s'étendant jusqu'à l'intérieur d'une piste incurvée (79, 85) agencée dans le bloc de montage (90, 86), et l'élément de positionnement (81), l'élément d'actionnement (67) avec la tige (73) et la piste incurvée (79, 85) coopérant ensemble de telle manière que lors d'un mouvement de rotation de l'élément de positionnement (81) autour de son axe longitudinal et selon le sens de rotation, l'élément d'actionnement (67) en forme de poussoir est déplacé en direction ou en éloignement de la valve d'admission (53, 54) et de la valve de sortie (55, 54) de la valve de régulation de pression de freinage (II) ;
f) l'élément d'actionnement (67) et l'organe de positionnement (59) sont ainsi agencés l'un par rapport à l'autre que l'organe de positionnement (59) est susceptible d'être déplacé par l'élément d'actionnement (67) en direction de la valve d'admission (53, 54) et de la valve de sortie (55, 54) lors d'un déplacement de l'élément d'actionnement (67) en direction de la valve d'admission (53, 54) et de la valve de sortie (55, 54) de la valve de régulation de pression de freinage (II).

6. Dispositif de régulation de force de freinage à commande en fonction de la charge, selon la revendication 5, caractérisé par les caractéristiques suivantes :
a) le guidage (71, 89) pour la tige (73) agencée sur l'élément d'actionnement (67) en forme de poussoir est formé par une fente ménagée dans l'élément de positionnement (81) ;
b) la piste incurvée (79, 85) agencée dans le bloc de montage (90, 86) est formée par une fente qui s'étend dans le bloc de montage (90, 86) sensiblement perpendiculairement à l'axe longitudinal du bloc de montage (90, 86).

7. Dispositif de régulation de force de freinage à commande en fonction de la charge, selon l'une au moins des revendications 1 à 4, caractérisé par les caractéristiques suivantes :
a) le dispositif d'entraînement (III) pour l'organe de positionnement (59) déplaçable en fonction de la charge possède un bloc de montage, agencé sur le boîtier (1, 27) de la valve de régulation de pression de freinage (II) et ceci du côté opposé à la valve d'admission (53, 54) et à la valve de sortie (55, 54) de la valve de régulation de pression de freinage (II) ;
b) le bloc de montage (90, 86) possède une ouverture (140) qui s'étend en direction de l'axe longitudinal de l'organe de positionnement (59). ainsi que de la valve d'admission (53, 54) et de la valve de sortie (55, 54) de la valve de régulation de pression de freinage (II), ouverture dans laquelle l'élément de positionnement (81) est agencé avec faculté de rotation autour de son axe longitudinal ;
c) l'élément de positionnement (81) comporte un évidement (72) qui s'étend en direction de son axe longitudinal, et dans lequel un élément d'actionnement (67) en forme de poussoir pour l'organe de positionnement (59) est agencé avec faculté de déplacement en direction de l'axe longitudinal de l'élément de positionnement (81) ;
d) l'organe de positionnement (59) est agencé entre la valve d'admission et la valve de sortie (53, 54, 55) et l'élément d'actionnement (67) ;
e) une tige (73) est agencée sur l'élément d'actionnement (67) de manière à s'étendre en éloignement de l'élément d'actionnement (67) et perpendiculairement à l'axe longitudinal de celui-ci, ladite tige traversant une piste incurvée agencée dans l'élément de positionnement (81) transversalement à l'axe longitudinal de l'élément de positionnement (81), et s'étendant jusqu'à l'intérieur d'un guidage agencé dans le bloc de montage (90, 86) en direction de l'axe longitudinal du bloc de montage (90, 86), et l'élément de positionnement (81), l'élément d'actionnement (67) en forme de poussoir avec la tige (73) et la piste incurvée coopérant ensemble de telle manière que lors d'un mouvement de rotation de l'élément de positionnement (81) autour de son axe longitudinal et selon le sens de rotation, l'élément d'actionnement (67) en forme de poussoir pour l'organe de positionnement (59) est déplacé en direction ou en éloignement de la valve d'admission (53, 54) et de la valve de sortie (55, 54) de la valve de régulation de pression de freinage (II) ;
f) l'élément d'actionnement (67) et l'organe de positionnement (59) sont ainsi agencés l'un par rapport à l'autre que l'organe de positionnement (59) peut être déplacé par l'élément d'actionnement (67) en direction de la valve d'admission (53, 54) et de la valve de sortie (55, 54) lors d'un déplacement de l'élément d'actionnement (67) en direction de la valve d'admission (53, 54) et de la valve de sortie (55, 54).

8. Dispositif de régulation de force de freinage à commande en fonction de la charge, selon la revendication 7, caractérisé par les caractéristiques suivantes :
a) le guidage pour la tige (73) agencée sur l'élément d'actionnement (67) en forme de poussoir est formé par une fente agencée dans le bloc de montage (90, 86) ;
b) la piste incurvée agencée sur l'élément de positionnement (81) est formée par une fente qui s'étend dans l'élément de positionnement (81) sensiblement perpendiculairement à l'axe longitudinal de l'élément de positionnement (81).

9. Dispositif de régulation de force de freinage à commande en fonction de la charge, selon l'une au moins des revendications précédentes, caractérisé en ce qu'il est prévu une valve de pilotage agencée dans ou sur le boîtier (1, 27) de la valve de régulation de pression de freinage (II) pour influencer l'établissement de la pression dans la chambre de commande (44) de la valve de régulation de pression de freinage.

10. Dispositif de régulation de force de freinage à commande en fonction de la charge, selon l'une au moins des revendications 1 à 4, caractérisé en ce que le dispositif d'entraînement (III) est formé par un piston (92, 96), agencé avec faculté de déplacement en direction de la valve d'admission (53, 54) et de la valve de sortie (55, 54) de la valve de régulation de pression de freinage (II) dans le boîtier (1, 27) de la valve de régulation de pression de freinage (II) sous la sollicitation d'un fluide sous pression et à l'encontre de la force d'un ressort (106), ledit piston étant agencé sur l'organe de positionnement (59) de la valve de régulation de pression de freinage (II) et ceci du côté détourné de la valve d'admission (53, 54) et de la valve de sortie (55, 54) de la valve de régulation de pression de freinage (II), et est en liaison d'action, ou susceptible d'être amené dans une liaison d'action, avec l'organe de positionnement (59) de telle manière que lors d'un déplacement du piston (92, 96) en direction de la valve d'admission (53, 54) et de la valve de sortie (55, 54) de la valve de régulation de pression de freinage (II), l'organe de positionnement (59) est susceptible d'être déplacé par le piston (92, 96) dans la même direction.

11. Dispositif de régulation de force de freinage à commande en fonction de la charge, selon l'une au moins des revendications 1 à 4, caractérisé en ce que le dispositif d'entraînement (III) pour l'organe de positionnement (59) de la valve de régulation de pression de freinage (II) est formé par un servomoteur électrique (109), lequel est agencé dans ou sur le boîtier (1, 27) de la valve de régulation de pression de freinage (II) et comporte une broche (108) qui coopère avec l'organe de positionnement (139) de la valve de régulation de pression de freinage (II) de telle manière que l'organe de positionnement (59) est susceptible d'être déplacé au moyen de la broche (108) en direction de ou en éloignement de la valve d'admission (53, 54) et de la valve de sortie (55, 54) de la valve de régulation de pression de freinage (II).

12. Dispositif de régulation de force de freinage à commande en fonction de la charge, selon l'une au moins des revendications 1 à 4, caractérisé par les caractéristiques suivantes :
a) le dispositif d'entraînement (III) pour l'organe de positionnement (59) déplaçable en fonction de la charge possède un bloc de montage (121), agencé sur le boîtier (1, 27) de la valve de régulation de pression de freinage (II) et ceci du côté opposé à la valve d'admission (53, 54) et la valve de sortie (55, 54) de la valve de régulation de pression de freinage (II) ;
b) le bloc de montage (121) possède une ouverture (120) qui s'étend en direction de l'axe longitudinal de l'organe de positionnement (59) ainsi que de la valve d'admission (53, 54) et de la valve de sortie (55, 54) de la valve de régulation de pression de freinage (II), ouverture dans laquelle l'élément de positionnement (122) est agencé avec faculté de rotation autour de son axe longitudinal et avec faculté de déplacement en direction de l'axe longitudinal du bloc de montage (121) ;
c) l'élément de positionnement (122) possède une piste incurvée (117) qui s'étend perpendiculairement à son axe longitudinal et dans laquelle s'étend un élément en forme de tige (118) agencé sur le boîtier (1, 27) ou sur le bloc de montage (121) ;
d) l'organe de positionnement (59) est agencé entre la valve d'admission et la valve de sortie (53, 54, 55) de la valve de régulation de pression de freinage (II) et l'élément de positionnement (122) ;
e) l'élément en forme de tige (118) et l'élément de positionnement (122) avec la piste incurvée (117) coopèrent de telle façon que lors d'un mouvement de rotation de l'élément de positionnement (122) autour de son axe longitudinal et selon le sens de rotation, l'élément de positionnement (122) est déplacé au moyen de la piste incurvée (117) et de l'élément en forme de tige (118) en direction de ou en éloignement de la valve d'admission (53, 54) et de la valve de sortie (55, 54) de la valve de régulation de pression de freinage (II) ;
f) l'élément de positionnement (122) et l'organe de positionnement (59) sont ainsi agencés l'un par rapport à l'autre que l'organe de positionnement (59) est susceptible d'être déplacé par l'élément de positionnement (122) en direction de la valve d'admission (53, 54) et de la valve de sortie (55, 54) de la valve de régulation de pression de freinage (II) lors d'un déplacement de l'élément de positionnement (122) en direction de la valve d'admission (53, 54) et de la valve de sortie (55, 54) de la valve de régulation de pression de freinage (II).

13. Dispositif de régulation de force de freinage à commande en fonction de la charge, selon l'une au moins des revendications 1 à 4, caractérisé par les caractéristiques suivantes :
a) le dispositif d'entraînement (III) pour l'organe de positionnement (59) déplaçable en fonction de la charge possède un bloc de montage (121) qui est agencé sur le boîtier (1, 27) de la valve de régulation de pression de freinage (II) et ceci du côté opposé à la valve d'admission (53, 54) et à la valve de sortie (55, 54) de la valve de régulation de pression de freinage (II) ;
b) le bloc de montage (121) possède une ouverture (120) qui s'étend en direction de l'axe longitudinal de l'organe de positionnement (59) ainsi que de la valve d'admission (53, 54) et de la valve de sortie (55, 54) de la valve de régulation de pression de freinage (II), ouverture dans laquelle l'élément de positionnement (122) est agencé avec faculté de rotation autour de son axe longitudinal et avec faculté de déplacement en direction de l'axe longitudinal du bloc de montage (121) ;
c) sur le bloc de montage (121) ou sur le boîtier (1, 27) est agencée une piste incurvée qui s'étend perpendiculairement à l'axe longitudinal du bloc de montage (121) ou du boîtier (1, 27), piste dans laquelle s'étend un élément en forme de tige agencé sur l'élément de positionnement (122) ;
d) l'organe de positionnement (59) est agencé entre la valve d'admission et la valve de sortie (53, 54, 55) de la valve de régulation de pression de freinage (II) et l'élément de positionnement (122) ;
e) la piste incurvée et l'élément de positionnement (122) avec l'élément en forme de tige coopèrent de telle manière que lors d'un mouvement de rotation de l'élément de positionnement (122) autour de son axe longitudinal et selon le sens de rotation, l'élément de positionnement (122) est déplacé au moyen de la piste incurvée et de la tige en direction de ou en éloignement de la valve d'admission (53, 54) et de la valve de sortie (55, 54) de la valve de régulation de pression de freinage (II) ;
f) l'élément de positionnement (122) et l'organe de positionnement (59) sont ainsi agencés l'un par rapport à l'autre que l'organe de positionnement (59) est susceptible d'être déplacé par l'élément de positionnement (122) en direction de la valve d'admission (53, 54) et de la valve de sortie (55, 54) de la valve de régulation de pression de freinage (II) lors d'un déplacement de l'élément de positionnement (122) direction de la valve d'admission (53, 54) et de la valve de sortie (55, 54) de la valve de régulation de pression de freinage (II).

14. Dispositif de régulation de force de freinage à commande en fonction de la charge, selon la revendication 12, caractérisé en ce que l'élément en forme de tige (118) est agencé de manière excentrique sur un composant en forme de tenon (119), et en ce que ledit composant en forme de tenon (119) est agencé avec faculté de rotation autour de son axe longitudinal sur le boîtier (1, 27) ou sur le bloc de montage (121) de sorte qu'en faisant tourner le composant en forme de tenon (119) autour de son axe longitudinal et selon le sens de rotation, l'élément de positionnement (122) est susceptible d'être déplacé en direction de ou en éloignement de la valve d'admission (53, 54) et de la valve de sortie (55, 54) de la valve de régulation de pression de freinage (II).

15. Dispositif de régulation de force de freinage à commande en fonction de la charge, selon l'une au moins des revendications 1 à 4, caractérisé par les caractéristiques suivantes :
a) le dispositif d'entraînement (III) pour l'organe de positionnement (59) déplaçable en fonction de la charge possède un bloc de montage (121), agencé sur le boîtier (1, 27) de la valve de régulation de pression de freinage (II) et ceci du côté opposé à la valve d'admission (53, 54) et à la valve de sortie (55, 54) de la valve de régulation de pression (II);
b) le bloc de montage (121) possède une ouverture (120) qui s'étend en direction de l'axe longitudinal (59) de l'organe de positionnement (59) ainsi que de la valve d'admission (53, 54) et de la valve de sortie (55, 54) de la valve de régulation de pression de freinage (II), ouverture dans laquelle l'élément de positionnement (123) est agencé avec faculté de rotation autour de son axe longitudinal ;
c) l'élément de positionnement (123) possède sur son côté tourné vers l'organe de positionnement (59) au moins une première came de commande (126, 127, 125, 137, 135, 136) ;
d) un élément d'actionnement (128) pour l'organe de positionnement (59) est agencé dans l'ouverture entre l'organe de positionnement (59) et le côté de l'élément de positionnement (123) qui comporte la première came de commande (126, 127, 125, 137, 135, 136), ledit élément d'actionnement étant susceptible de se déplacer en direction de l'axe longitudinal de l'ouverture (120) ;
e) l'élément d'actionnement (128) possède sur son côté tourné vers la première came de commande (126, 127, 125, 137, 135, 136) une deuxième came de commande (129, 124, 138) ; ladite première came de commande (126, 127, 125, 137, 135, 136) et ladite deuxième came de commande (129, 124, 138) étant ainsi réalisées qu'elles peuvent être amenées en contact l'une contre l'autre ;
f) l'élément d'actionnement (128) est bloqué à l'encontre d'une rotation autour de son axe longitudinal au moyen d'un dispositif antirotation (130, 131) ;
g) l'élément de positionnement (123) est bloqué à l'encontre d'un déplacement inopiné en direction de l'axe longitudinal de l'ouverture (120) par des moyens de blocage (132, 133, 134) ;
h) l'élément de positionnement (123) avec la première came de commande (126, 127, 125, 137, 135, 136) et l'élément d'actionnement (128) avec la deuxième came de commande (129, 124, 138) sont ainsi agencés l'un par rapport à l'autre et coopèrent de telle façon que lors d'un mouvement de rotation de l'élément de positionnement (123) autour de son axe longitudinal l'élément d'actionnement (128) est déplacé par l'élément de positionnement (123) en direction de la valve d'admission (53, 54) et de la valve de sortie (55, 54) de la valve de régulation de pression de freinage (II) ;
i) l'organe de positionnement (59) est agencé entre la valve d'admission et la valve de sortie (53, 54, 55) de la valve de régulation de pression de freinage (II) et l'élément d'actionnement (128) ;
k) l'élément de positionnement (123) et l'élément d'actionnement (128) sont ainsi agencés par rapport à l'organe de positionnement (59) que lors d'un mouvement de rotation de l'élément de positionnement (123) autour de son axe longitudinal, et un déplacement ainsi provoqué de l'élément d'actionnement (128) en direction de la valve d'admission (53, 54) et de la valve de sortie (55, 54) de la valve de régulation de pression de freinage (II) l'organe de positionnement (59) est susceptible d'être déplacé par l'élément de positionnement (123) et par l'élément d'actionnement (128) en direction de la valve d'admission (53, 54) et de la valve de sortie (55, 54) de la valve de régulation de pression de freinage (II).

16. Dispositif de régulation de force de freinage à commande en fonction de la charge, selon la revendication 15, caractérisé en ce que les moyens de blocage (132, 134, 133) pour l'élément de positionnement (123) sont formés par une gorge périphérique (132) dans l'élément de positionnement (123) et par un composant en forme de tige (134), agencé directement ou indirectement sur le bloc de montage (121) ou sur le boîtier (1, 27) et s'étendant jusque dans la gorge périphérique (132) de l'élément de positionnement (123).

17. Dispositif de régulation de force de freinage à commande en fonction de la charge, selon la revendication 16, caractérisé en ce que le composant en forme de tige (134) est agencé de manière excentrique sur un composant en forme de tenon (133), et en ce que le composant en forme de tenon (133) est agencé avec faculté de rotation autour de son axe longitudinal sur le bloc de montage (121) ou sur le boîtier (1, 27) de telle manière qu'en faisant tourner le composant en forme de tenon (133) autour de son axe longitudinal et selon le sens de rotation, l'élément de positionnement (123) est susceptible d'être déplacé en direction de ou en éloignement de la valve d'admission (53, 54) et de la valve de sortie (55, 54) de la valve de régulation de pression de freinage (II).

18. Dispositif de régulation de force de freinage à commande en fonction de la charge, selon la revendication 15, caractérisé en ce que les moyens de blocage antirotation (131, 130) pour l'élément d'actionnement (128) sont formés par une gorge (131) ménagée dans l'élément d'actionnement (128) en direction de l'axe longitudinal de l'élément d'actionnement (128) et par un composant en forme de tige (130), lequel est agencé sur le bloc de montage (121) ou sur le boîtier (1, 27) et s'étend jusque dans la gorge (131).

19. Dispositif de régulation de force de freinage à commande en fonction de la charge, selon l'une au moins des revendications 5, 6, 7, 8, 12, 13, 14, 15, 16, 17 ou 18, caractérisé en ce que le bloc de montage pour la réception de l'élément de positionnement (81, 122, 123) est formé par la région du boîtier (1, 27) qui présente l'ouverture (64, 120).

20. Dispositif de régulation de force de freinage à commande en fonction de la charge, selon la revendication 18, caractérisé en ce que le composant en forme de tige (130) est agencé de manière excentrique sur un composant en forme de tenon, et en ce que le composant en forme de tenon est agencé avec faculté de rotation autour de son axe longitudinal sur le bloc de montage (121) ou sur le boîtier (1, 27) de telle manière qu'en faisant tourner le composant en forme de tenon autour de son axe longitudinal et selon le sens de rotation, l'élément d'actionnement (128) est susceptible d'être déplacé en direction de ou en éloignement de la valve d'admission (53, 54) et de la valve de sortie (55, 54) de la valve de régulation de pression de freinage (II) au moyen du composant en forme de tige (130) qui attaque une butée de l'élément d'actionnement (128).
